# EUROPEAN PATENT APPLICATION

(11) **EP 4 637 178 A1**
(43) Date of publication of application: **22.10.2025**
(21) Application number: 23907171.5
(22) Date of filing: 22.12.2023
(51) Int. Cl.: H04Q 9/00, F17C 13/02, G06Q 50/06

(54) **GAS STORAGE CONTAINER MANAGEMENT SYSTEM AND MANAGEMENT METHOD, AND FRAME**

(30) Priority: 23.12.2022 JP 2022206321
(71) Applicant: Atomis Inc., Kobe-shi, Hyogo 650-0047 (JP)
(72) Inventor: ASARI Daisuke, Kobe-shi, Hyogo 650-0047 (JP)
(74) Representative: AOMB Polska Sp. z.o.o.
(86) International application number: PCT/JP2023/046086
(87) International publication number: WO 2024/135811

(57) **Abstract**

[Problem to be Solved] To provide a management system and a management method for reducing the power consumption and the cost of gas storage containers.

[Solution] The management system M for gas storage containers comprises a gas storage container P equipped with a short-range transmission unit, a relay device Q equipped with a short-range receiving unit and a long-range transmission unit, and a management device R equipped with a long-range receiving unit. The short-range receiving unit is configured to receive a first signal S1 transmitted from the short-range transmission unit. The long-range receiving unit is configured to receive a second signal S2 transmitted from the long-range transmission unit.

## Description

### TECHNICAL FIELD

The present disclosure relates to a system and method for managing gas storage containers. The present disclosure also relates to a pedestal for supporting the gas storage container.

### BACKGROUND ART

The applicant has reported a gas storage container that has flat upper and lower surfaces and can be stacked vertically, with the aim of providing a gas storage container that is easy to transport and install (Patent Document 1). The gas storage container preferably includes the gas remaining amount measurement module. The gas remaining amount measurement module may be configured to be capable of wireless communication and GPS (Global Positioning System) communication. By adopting such a configuration, a user of the gas storage container can manage the location of the gas storage container and the remaining amount of gas by using a monitoring device or the like.

### Citation List

### Patent Literature

[Patent Document 1] WO2019/026872

### SUMMARY OF THE INVENTION

### Technical Problem

On the other hand, the provider of gas storage containers needs to manage the gas storage containers in an integrated manner, typically using a management device located remotely.

However, when remotely managing the locations of conventional gas storage containers, it is necessary to install a position sensor including a GPS module or the like on each gas storage container. Similarly, it is also necessary to install a long-distance communication module on each gas storage container to enable long-distance communication with a management device.

The present inventor has found that adopting such a configuration results in high power consumption by each module, thereby limiting the service life of the gas storage container. The present inventor has also found that, in the above configuration, the cost of the gas storage container can become excessive.

Accordingly, an object of the present invention is to provide a management system and a management method for reducing the power consumption and cost of gas storage containers. Another object of the present invention is to provide a pedestal and a transport relay device for the gas storage containers.

### Solution to Problem

According to an exemplary embodiment of the present invention, a management system and management method for gas storage containers, as well as a pedestal and a transport relay device, are provided.

**[1]** A system for managing gas storage containers, comprising: a gas storage container equipped with a short-range transmission unit; a relay device equipped with a short-range receiving unit and a long-range transmission unit; and a management device equipped with a long-range receiving unit; wherein the short-range receiving unit is configured to receive a first signal transmitted from the short-range transmission unit, and wherein the long-range receiving unit is configured to receive a second signal transmitted from the long-range transmission unit.
[2] The system according to [1], wherein the first signal comprises first identification information assigned to each of the gas storage containers, and the second signal comprises the first identification information and second identification information assigned to each of the relay devices.
[3] The system according to [1] or [2], wherein the gas storage container further comprises one or more sensors used for measuring a gas remaining amount in the gas storage container, and the first signal comprises information related to the gas remaining amount.
[4] The system according to [3], wherein at least one of the sensors is selected from the group consisting of a pressure sensor, a temperature sensor, and a liquid level sensor.
[5] The system according to any one of [1] to [4], wherein the gas storage container further comprises an acceleration sensor, and the first signal comprises information related to an impact applied to the gas storage container.
[6] The system according to any one of [1] to [5], wherein the gas storage container further comprises a battery, and the first signal comprises information related to a remaining amount of the battery.
[7] The system according to any one of [1] to [6], wherein the gas storage container further comprises a power receiving member, and the relay device comprises a power transmitting member corresponding to the power receiving member.
[8] The system according to any one of [1] to [7], wherein the relay device further comprises a memory unit in which information regarding a installation position is pre-entered or a position sensor configured for GPS communication, and the second signal comprises a position information of the relay device.
[9] The system according to any one of [1] to [8], wherein the gas storage container has flat upper and lower surfaces and is vertically stackable.
[10] The system according to [9], wherein the gas storage container comprises: a casing with a flat upper surface and a flat lower surface and is vertically stackable; and a gas container installed in the casing.
[11] The system according to [10], wherein the short-range transmission unit is installed between the casing and the gas container.
[12] The system according to any one of [1] to [11], wherein the relay device is a pedestal for placing the gas storage container.
[13] The system according to [12], wherein the gas storage container has flat upper and lower surfaces and is vertically stackable, the pedestal is configured to support the gas storage containers in a stacked state, where a plurality of gas storage containers are stacked vertically, and the second signal comprises information related to a stacking position of the gas storage container on the pedestal.
[14] A method for managing gas storage containers, comprising: transmitting a first signal from a gas storage container to a relay device via short-range communication; and transmitting a second signal from the relay device to a management device via long-range communication.
[15] The method according to [14], wherein the first signal comprises first identification information assigned to each of the gas storage containers, and the second signal comprises the first identification information and second identification information assigned to each of the relay devices.
[16] The method according to [14] or [15], wherein the first signal comprises information related to a gas remaining amount of the gas storage container.
[17] The method according to [16], wherein the second signal comprises position information of the relay device.
[18] A pedestal for placing a gas storage container, comprising: a first communication unit for performing short-range communication with the gas storage container; and a second communication unit for performing long-range communication with a management device.
[19] The pedestal according to [18], further comprising a power transmitting member for supplying power to the gas storage container.
[20] The pedestal according to [18] or [19], wherein the gas storage container has flat upper and lower surfaces and is vertically stackable, the pedestal is configured to support the gas storage containers in a stacked state, where a plurality of gas storage containers are stacked vertically, and the second communication unit is configured to transmit information related to a stacking position of the gas storage container on the pedestal to the management device.

### Advantageous Effects of Invention

The present invention makes it possible to reduce the power consumption and the cost of gas storage containers.

### BRIEF DESCRIPTION OF DRAWINGS

FIG. 1 is a conceptual diagram of a management system and a management method for gas storage containers according to one embodiment of the present invention.
FIG. 2 is a configuration diagram of a management system for gas storage containers according to one embodiment of the present invention.
FIG. 3A is a configuration diagram of a gas storage container according to one embodiment of the present invention.
FIG. 3B is a configuration diagram of a gas storage container according to another embodiment of the present invention.
FIG. 4 is a configuration diagram of a relay device (pedestal) according to one embodiment of the present invention.
FIG. 5 is a configuration diagram of a relay device (transport relay device) according to another embodiment of the present invention.
FIG. 6 is a configuration diagram of a relay device (information processing terminal) according to another embodiment of the present invention.
FIG. 7 is a configuration diagram of a management device according to one embodiment of the present invention.
FIG. 8 is a perspective view of a gas storage container according to one embodiment of the present invention as viewed from the top.
FIG. 9 is a perspective view of a gas storage container according to one embodiment of the present invention as viewed from the bottom.
FIG. 10 is a perspective view of a gas storage container according to one embodiment of the present invention as viewed from the back.
FIG. 11 is an exploded view of a gas storage container according to one embodiment of the present invention, showing a state where a part of the casing and the gas container are removed. FIG. 11 illustrates an example of a specific arrangement method for an IoT (Internet of Things) module.
FIG. 12 is a perspective view of a pedestal and gas storage system according to one embodiment of the invention.
FIG. 13 is a perspective and exploded view of a pedestal and gas storage system according to another embodiment of the invention.
FIG. 14 is a conceptual diagram showing an example of a configuration of a power supplying (transmitting) portion of a pedestal according to an embodiment of the present invention.
FIG. 15 is a perspective view of an example of a gas storage system according to an embodiment of the invention.
FIG. 16 is a front view showing an example of a gas storage system in which pedestals according to an embodiment of the present invention are arranged in a horizontal direction.

### DESCRIPTION OF EMBODIMENTS

Hereinafter, a management system and a management method for gas storage containers according to one embodiment of the present invention will be described. When referring to the drawings, the same reference numerals are given to the components exhibiting the same or similar functions, and duplicate description will be omitted. Also, in the following description, the expression "A and B are connected" includes not only a case where A and B are directly connected, but also a case where A and B are indirectly connected with an intervening member therebetween.

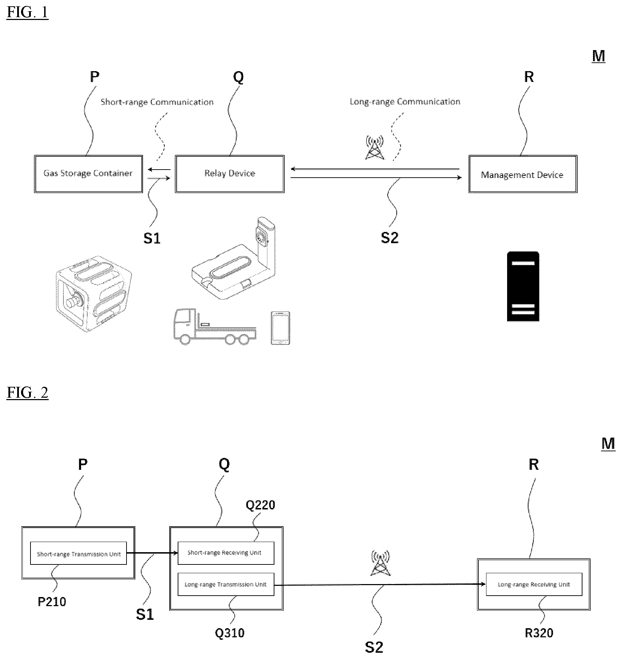

FIG. 1 is a conceptual diagram of a management system and a management method for gas storage containers according to one embodiment of the present invention. As shown in FIG. 1, the management system M includes a gas storage container P, a relay device Q, and a management device R. The gas storage container P and the relay device Q are configured to be capable of short-range communication, and the relay device Q and the management device R are configured to be capable of long-range communication. A first signal S1 is transmitted from the gas storage container P to the relay device Q via short-range communication. A second signal S2 is transmitted from the relay device Q to the management device R via long-range communication. The second signal S2 is typically transmitted via a base station. It should be noted that the lower illustration in FIG. 1 is merely exemplary. Examples of the gas storage container P, the relay device Q, and the management device R will be described in detail later.

FIG. 2 is a configuration diagram of a management system for gas storage containers according to one embodiment of the present invention. As shown in FIG. 2, the gas storage container P comprises a short-range transmission unit P210, the relay device Q comprises a short-range receiving unit Q220 and a long-range transmission unit Q310, and the management device R comprises a long-range receiving unit R320.

The short-range receiving unit Q220 is configured to receive the first signal S1 transmitted from the short-range transmission unit P210. That is, the short-range transmission unit P210 is configured to transmit the first signal S1 to the short-range receiving unit Q220.

The first signal S1 comprises, for example, first identification information assigned to each of the gas storage containers P. By receiving such a first signal S1, the relay device Q can recognize that a specific gas storage container P is present in the vicinity of the relay device Q.

The long-range receiving unit R320 is configured to receive the second signal S2 transmitted from the long-range transmission unit Q310. That is, the long-range transmission unit Q310 is configured to transmit the second signal S2 to the long-range receiving unit R320.

The second signal S2 comprises, for example, the above-mentioned first identification information received by the relay device Q and second identification information assigned to each of the relay devices Q. By receiving such a second signal S2, the management device R can recognize that a specific gas storage container P is present in the vicinity of a specific relay device Q.

In this manner, the gas storage container P is configured to communicate indirectly with the management device R via the relay device Q. That is, the gas storage container P does not need to communicate directly with the management device R. In particular, if the position information of the relay device Q is known by the management device R, the management device R can indirectly grasp the position of the gas storage container P that is within the short-range communication range of the relay device Q. Therefore, by adopting such a configuration, it becomes unnecessary to install a module for GPS communication and/or long-range communication in each of the gas storage containers P. Accordingly, by adopting such a configuration, it is possible to reduce the power consumption and the cost of the gas storage containers P.

Here, "short-range communication" typically refers to communication over a relatively short distance between devices, and may be either wireless communication or wired communication. Examples of short-range communication standards include Bluetooth (registered trademark), Wi-Fi (registered trademark), Zigbee (registered trademark), infrared communication, NFC (Near Field Communication), and USB (Universal Serial Bus). From the viewpoint of power consumption, it is preferable to use Bluetooth, particularly BLE (Bluetooth Low Energy), as the short-range communication standard. The short-range communication may also be communication performed between the power receiving member and the power transmitting member during wireless power transfer, as will be described later. The "vicinity" and "short-range communication range" described above typically refer to a distance at which the gas storage container P and the relay device Q can be paired via a Bluetooth connection, and are, for example, within a radius of 100 meters, preferably within a radius of 50 meters, and more preferably within a radius of 20 meters.

Here, "long-range communication" typically refers to wireless communication via a base station, such as communication using mobile communication standards including LTE (Long Term Evolution), 4G, and 5G. The long-range communication can also be performed using LPWA (Low Power Wide Area) technology. It should be noted that the relay device Q and the management device R are not necessarily physically distant from each other.

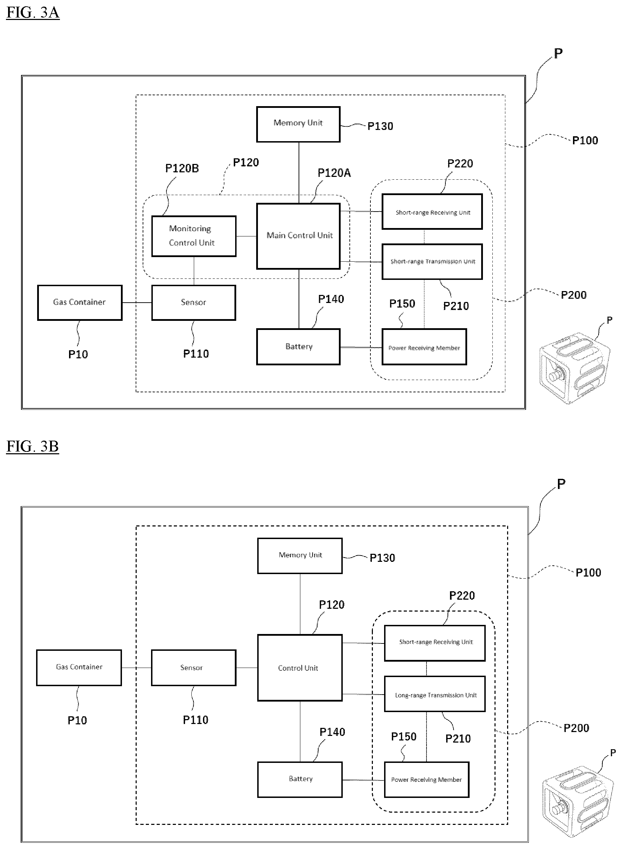

FIG. 3A is a configuration diagram of a gas storage container according to one embodiment of the present invention. In the lower right of FIG. 3A, a gas storage container P having a special appearance is shown, but this is merely an example. The gas storage container P may be, for example, a gas cylinder having a conventional bottle shape, as long as it is equipped with the short-range transmission unit P210. The gas storage container P may comprise a gas container (i.e., the main body of the gas storage container) and a casing that surrounds the gas container. In this case, the short-range transmission unit P210 may be positioned between the gas container and the casing. In the configuration of the gas storage container P described later, elements other than the short-range transmission unit P210 may be omitted as appropriate. The gas storage container P may further include components not shown in FIG. 3A.

The gas storage container P shown in FIG. 3A comprises a gas container P10 and an IoT module P100. The IoT module P100 comprises a sensor P110, a control unit P120, a memory unit P130, a battery P140, and a short-range communication module P200. The short-range communication module P200 comprises a power receiving member P150, a short-range transmission unit P210, and a short-range receiving unit P220. It should be noted that the power receiving member P150 may be a part of the short-range communication module P200 or may not be a part of the short-range communication module P200.

The sensor P110 is connected to the gas container 10. The sensor P110 is, for example, one or more sensors used for measuring the gas remaining amount of the gas container P10 (i.e., that of the gas storage container P). The sensor is, for example, at least one selected from the group consisting of a pressure sensor, a temperature sensor, and a liquid level sensor. The sensor P110 comprises, for example, a pressure sensor and a temperature sensor. In this case, the gas remaining amount in the gas container P10 can be estimated by calculation based on the measured pressure and temperature data. When liquefied gas can be stored in the gas container, a liquid level sensor may be used instead of, or together with, the pressure sensor. In this case as well, the gas remaining amount in the gas container P10 can be estimated based on the measured liquid level height data. In this manner, when the gas storage container P is equipped with one or more sensors used for measuring the gas remaining amount, the IoT module P100 functions as a gas remaining amount measurement module.

The pressure sensor is, for example, connected to an outlet of the gas container P10, and preferably mounted between the gas container P10 and a valve (not shown). By mounting the pressure sensor between the gas container P10 and the valve, it becomes possible to constantly measure the pressure inside the gas container P10. The temperature sensor may be connected to the gas container P10 or may be disposed in the vicinity of the gas container P10. That is, the temperature sensor may be configured to measure the internal temperature of the gas container P10, or may be configured to measure the temperature in the vicinity of the gas container P10. Further, as the liquid level sensor described above, for example, a float sensor, an ultrasonic sensor, or a capacitance sensor can be used.

The sensor P110 may be an acceleration sensor. Alternatively, the gas storage container P may further comprise an acceleration sensor as the sensor P110 in addition to the one or more sensors used for measuring the gas remaining amount. That is, the sensor P110 may be at least one sensor selected from the group consisting of a pressure sensor, a temperature sensor, a liquid level sensor, and an acceleration sensor. The acceleration sensor may be used, for example, as an impact sensor for detecting an impact applied to the gas storage container P. The acceleration sensor is particularly useful when the gas storage container P is in a portable form. The sensor P110 may further comprise a gyro sensor (angular velocity sensor) in addition to, or instead of, the acceleration sensor. That is, the sensor P110 may be at least one sensor selected from the group consisting of a pressure sensor, a temperature sensor, a liquid level sensor, an acceleration sensor, and a gyro sensor.

The control unit P120 is connected to the sensor P110. An analog-to-digital (A/D) converter (not shown) may be provided between the control unit P120 and the sensor P110. The control unit P120 is, for example, a CPU (Central Processing Unit). The control unit P120 is responsible for controlling measurement, charging, communication, and the like in the IoT module P100.

The memory unit P130 is connected to the control unit P120. A program executed by the control unit P120 is recorded in the memory unit P130, for example. This program is, for example, a computer program for causing the control unit P120 to perform a function of transmitting the first signal S1 from the gas storage container P to the relay device Q.

Typically, first identification information for identifying the gas storage container P is recorded in the memory unit P130 at the time of manufacture or shipment of the gas storage container P. The first identification information is, for example, an identification ID such as a lot number. At least one piece of information selected from the manufacturing date, shipping date, user name, type and filling ratio of the porous material filled, and type of gas filled in the gas storage container P may further be recorded in the memory unit P130. Alternatively, these additional pieces of information may be recorded in the management device R in association with the first identification information.

Typically, information measured or calculated in relation to the gas storage container P is recorded in the memory unit P130 from time to time. For example, raw data (measurement time and measured value) measured by the sensor P110 may be recorded in the memory unit P130. Alternatively, the memory unit P130 may record values calculated by the control unit P120 based on the raw data. For example, information related to the gas remaining amount of the gas container P10 may be recorded in the memory unit P130. Alternatively, information related to an impact applied to the gas storage container P may be recorded in the memory unit P130. Additionally, information related to the remaining amount of the battery P140, which will be described later, may be recorded in the memory unit P130. Here, the "information related to the gas remaining amount" may be parameters used for calculating the gas remaining amount (such as pressure, temperature, and liquid level height), estimated values of the gas remaining amount calculated from these parameters, or any intermediate parameters used for calculating the gas remaining amount. The same applies to the "information related to an impact" and the "information related to the remaining amount of the battery."

The battery P140 is connected to the control unit P120. The battery P140 is responsible for supplying power to other components of the IoT module P100. The battery P140 is preferably a rechargeable secondary battery. By adopting such a configuration, it becomes possible for a user to charge the IoT module P100, allowing the IoT module P100 and the gas storage container P to be used continuously over a longer period. The remaining amount of the battery P140 is typically managed by the control unit P120.

The power receiving member P150 is connected to the battery P140. The power receiving member P150 is responsible for charging the battery P140 by receiving power from a corresponding power transmitting member. This makes it possible for a user to charge the IoT module P100, allowing the IoT module P100 and the gas storage container P to be used continuously over a long period. Power supply from the power transmitting member to the power receiving member P150 is typically performed in a non-contact manner.

There are no particular limitations on the configuration of the power receiving member P150. The power receiving member P150 is typically a power receiving coil. Power supply from the power transmitting member to the power receiving member P150 is typically wireless power transfer. The method of wireless power transfer may be a non-radiative (short-range) type or a radiative (long-range) type. Examples of non-radiative power feeding methods include methods using electromagnetic induction, magnetic field resonance, or electric field coupling. Examples of the radiation type power feeding method include a radio wave method and a laser method. Wireless power transfer from the power transmitting member to the power receiving member P150 is particularly preferably performed by an electromagnetic induction method or a magnetic resonance method from the viewpoint of transmission through shielding materials such as a casing. Power supply to the power receiving member P150 can be performed, for example, via a pedestal, which will be described later. Power supply to the power receiving member P150 may also be performed by any other method.

When the relay device Q has a power transmitting member, the power receiving member P150 may also function as the short-range transmission unit P210 and/or the short-range receiving unit P220. That is, the power receiving member P150 may be the short-range communication module P200. In such a case, short-range communication between the gas storage container P and the relay device Q can also be performed by data communication between the power receiving member P150 and the power transmitting member. Such data communication is performed, for example, by serial communication or parallel communication, preferably by serial communication. Examples of serial communication methods include UART (Universal Asynchronous Receiver/Transmitter), SPI (Serial Peripheral Interface), CSI (Clocked Serial Interface), and I2C (Inter-Integrated Circuit). From the viewpoints of cost and convenience, it is particularly preferable to use UART.

The short-range communication module P200 is connected to the control unit P120. The short-range communication module P200 is a module for performing short-range communication with the relay device Q. The short-range communication module P200 is typically a Bluetooth module, and enables short-range communication between the gas storage container P and the relay device Q by pairing with the relay device Q. The short-range communication module P200 consumes significantly less power compared to a module for performing long-range communication.

As described above, the short-range transmission unit P210 is configured to transmit the first signal S1 to the relay device Q via short-range communication. The first signal S1 typically includes information recorded in the memory unit P130. That is, the first signal S1 may include, for example, first identification information assigned to each of the gas storage containers P. The first signal S1 may include information related to the gas remaining amount of the gas container P10. The first signal S1 may include information related to an impact applied to the gas storage container P. The first signal S1 may include information related to the remaining amount of the battery P140.

The short-range receiving unit P220 is configured to receive signals from the relay device Q. When the gas storage container P is equipped with the short-range receiving unit P220, bidirectional communication between the gas storage container P and the relay device Q becomes possible. Such a configuration may allow control of the gas storage container P by or through the relay device Q. In such a case, for example, it becomes possible for the relay device Q to instruct the gas storage container P to transmit a first signal S1.

FIG. 3B is a configuration diagram of a gas storage container according to another embodiment of the present invention. The configuration shown in FIG. 3B is the same as the configuration shown in FIG. 3A except that the control unit P120 includes a main control unit P120A and a monitoring control unit P120B. As illustrated, the monitoring control unit P120B is provided between the sensor P110 and the main control unit P120A.

The main control unit P120A is, for example, a microcontroller unit (MCU) for communication processing and is configured to control communication with the relay device Q via the short-range communication module P200. That is, the main control unit P120A is configured to control at least the transmission of the first signal S1 from the short-range transmission unit P210. In this manner, since the main control unit P120A is responsible for controlling communication processing with the outside, its power consumption is relatively large. Therefore, the main control unit P120A is configured to enter a dormant (sleep) state when communication with the outside is not required. That is, the main control unit P120A is configured to be switchable between a dormant state and an active state.

The monitoring control unit P120B is, for example, a low-power module for monitoring the sensor P110. That is, the monitoring control unit P120B is configured to monitor signals from the sensor P110. Additionally, the monitoring control unit P120B is also responsible for activating the main control unit P120A, that is, switching it from the dormant state to the active state, in response to signals from the sensor P110. Activation of the main control unit P120A by the monitoring control unit P120B is performed, for example, when the sensor P110 detects a significant change in a measurement parameter. For example, such activation is performed when an acceleration sensor included in the sensor P110 detects an abnormality such as vibration or impact applied to the gas storage container P. Such activation may also be performed when a pressure sensor, temperature sensor, or liquid level sensor included in the sensor P110 detects a significant change in each measurement parameter or in the gas remaining amount calculated therefrom. Alternatively, such activation may be configured to be performed periodically at a preset interval, independently of signals from the sensor P110.

In this manner, in the configuration shown in FIG. 3B, the gas storage container P includes the sensor P110, the main control unit P120A, and the monitoring control unit P120B. The main control unit P120A is configured to control the transmission of the first signal S1 from the short-range transmission unit P210 of the gas storage container P and is switchable between a dormant state and an active state. The monitoring control unit P120B is connected between the sensor P110 and the main control unit P120A, and is configured to monitor signals from the sensor P110 and to activate the main control unit P120A from the dormant state to the active state based on these signals.

As described above, in the configuration shown in FIG. 3B, the control unit P120 is separated into the main control unit P120A and the monitoring control unit P120B. The monitoring control unit P120B is configured to control the active/dormant state of the main control unit P120A based on signals from the sensor P110, for example. Here, the monitoring control unit P120B consumes significantly less power compared to the main control unit P120A, which is responsible for communication processing. Therefore, by using the monitoring control unit P120B to suppress the communication processing of the main control unit P120A as described above, it becomes possible to significantly reduce the power consumption of the control unit P120. That is, by adopting such a configuration, it becomes possible to further reduce the power consumption of the gas storage container P and the entire management system M.

Further, in the configuration shown in FIG. 3B, monitoring of the sensor P110 by the monitoring control unit P120B continues even while the main control unit P120A is in the dormant state. Therefore, by adopting such a configuration, it becomes possible to continuously monitor abnormalities or the like occurring in the gas storage container P while suppressing power consumption during normal operation. Accordingly, by adopting such a configuration, it becomes possible to achieve safer long-term operation of the gas storage container P and the entire management system M.

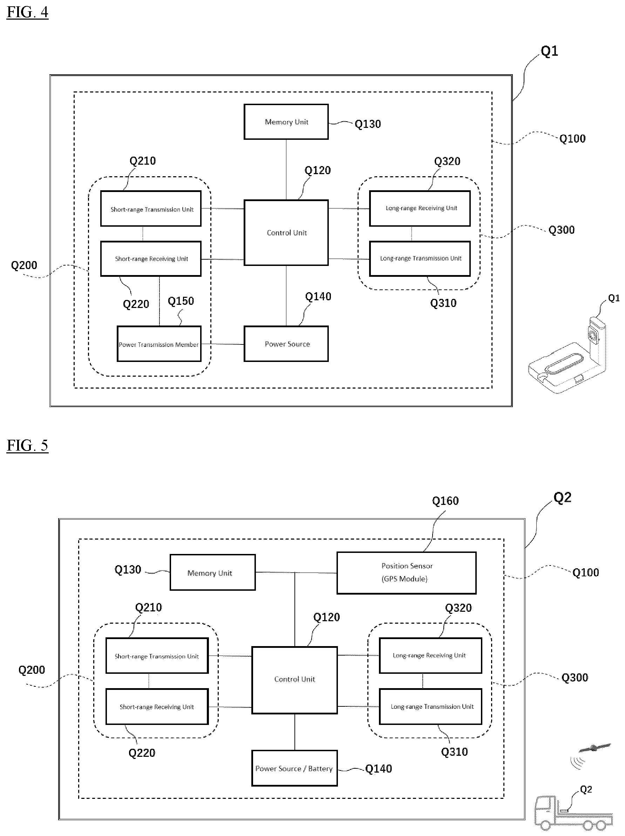

FIGS. 4 to 6 show several examples of the configuration of the relay device Q. The relay device Q may take any form as long as it includes the short-range receiving unit Q220 and the long-range transmission unit Q310. Additionally, in the configurations of the relay device Q described later, elements other than the short-range receiving unit Q220 and the long-range transmission unit Q310 may be omitted as appropriate. The relay device Q may further include components not shown in FIGS. 4 to 6.

FIG. 4 is a configuration diagram of a relay device (pedestal) according to one embodiment of the present invention. That is, the relay device Q shown in FIG. 4 is a pedestal Q1 for placing the gas storage container P. It should be noted that the lower right portion of FIG. 4 shows a pedestal Q1 having a special appearance, but this is merely an example, and any form of pedestal may be used as the relay device Q.

The pedestal Q1 shown in FIG. 4 includes an IoT module Q100. The IoT module Q100 comprises a control unit Q120, a memory unit Q130, a power supply Q140, a short-range communication module Q200, and a long-range communication module Q300. The short-range communication module Q200 comprises a power transmitting member Q150, a short-range transmission unit Q210, and a short-range receiving unit Q220. The long-range communication module Q300 comprises a long-range transmission unit Q310 and a long-range receiving unit Q320. It should be noted that the power transmitting member Q150 may be a part of the short-range communication module Q200 or may not be a part of the short-range communication module Q200.

The control unit Q120 is, for example, a CPU. The control unit Q120 is responsible for controlling charging, communication, and the like in the pedestal Q1 serving as the relay device Q. The control unit Q120 may be configured to calculate the gas remaining amount of the gas storage container P based on the information included in the first signal S1.

The memory unit Q130 is connected to the control unit Q120. A program executed by the control unit Q120 is recorded in the memory unit Q130, for example. This program is, for example, a computer program for causing the control unit Q120 to perform a function of transmitting the second signal S2 from the relay device Q to the management device R.

Typically, second identification information for identifying the pedestal Q1 is recorded in the memory unit Q130 at the time of manufacture or shipment of the pedestal Q1. The second identification information is, for example, an identification ID such as a lot number. At least one piece of information selected from the installation location, manufacturing date, shipping date, and user name of the pedestal Q1 may further be recorded in the memory unit Q130. Alternatively, these additional pieces of information may be recorded in the management device R in association with the second identification information. Additionally, the second identification information may be recorded in a SIM (Subscriber Identity Module) serving as the long-range communication module Q300, which will be described later.

The memory unit Q130 typically stores information related to the gas storage container P that is connected in close proximity. That is, the memory unit Q130 stores the first signal S1 and/or information processed therefrom. For example, the memory unit Q130 may store raw data (measurement time and measured value) measured by the sensor P110 of the gas storage container P. Alternatively, the memory unit Q130 may store an estimated value of the remaining gas, calculated by the control unit P120 of the gas storage container P based on the above raw data. That is, the memory unit Q130 may store information related to the gas remaining amount in the gas storage container P. Alternatively, the memory unit Q130 may store information related to an impact applied to the gas storage container P. The memory unit Q130 may also store information related to the battery remaining amount of the gas storage container P. These pieces of information related to the gas storage container P may be transferred directly to the management device R as part or all of the second signal S2 without being recorded in the memory unit Q130.

The power supply Q140 is typically an external power source and serves to supply power to the pedestal Q1. When the pedestal Q1 is used to supply power to the gas storage container P, the power supply Q140 also serves to supply power to the gas storage container P.

The power transmission member Q150 is connected to the power supply Q140. The power transmission member Q150 serves to charge the gas storage container P via the power receiving member P150 of the gas storage container P. Power supply from the power transmission member Q150 to the power receiving member P150 is typically performed in a non-contact manner.

There are no particular limitations on the configuration of the power transmission member Q150. The power transmission member Q150 is, for example, a power transmission coil. As described above, there are no limitations on the power supply method from the power transmission member to the power receiving member. When the power supply is performed in a non-contact manner, the non-contact power supply is preferably carried out by an electromagnetic induction method or a magnetic resonance method.

When the gas storage container P has the power receiving member P150, the power transmission member Q150 may also function as the short-range transmission unit Q210 and/or the short-range reception unit Q220. That is, the power transmission member Q150 may be a short-range communication module Q200. In such a case, short-range communication between the gas storage container P and the pedestal Q1 can also be performed through data communication between the power receiving member P150 and the power transmission member Q150. The method and the like of such data communication are as previously described.

The short-range communication module Q200 is connected to the control unit Q120. The short-range communication module Q200 is a module for performing short-range communication with the gas storage container P. The short-range communication module Q200 is typically a Bluetooth module, and enables short-range communication between the gas storage container P and the pedestal Q1 through pairing with the gas storage container P.

The short-range transmission unit Q210 is configured to be capable of transmitting signals to the gas storage container P. When the pedestal Q1 is equipped with the short-range transmission unit Q210, bidirectional communication becomes possible between the gas storage container P and the pedestal Q1. With such a configuration, control of the gas storage container P by or via the pedestal Q1 may become possible. In such a case, for example, it becomes possible for the pedestal Q1 to instruct the gas storage container P to transmit the first signal S1.

The short-range receiving unit Q220 is configured to receive the first signal S1 from the gas storage container P via short-range communication. The first signal S1 is as previously described. The first signal S1 may be temporarily recorded in the memory unit Q130 or may be transferred directly to the management device R as part or all of the second signal S2 via the long-range communication module Q300 described later.

The long-range communication module Q300 is connected to the control unit Q120. The long-range communication module Q300 is a module for performing long-range communication with the management device R. As the long-range communication module Q300, a known configuration such as a SIM card can be used, for example. The long-range communication module Q300 may be configured to communicate with the management device R via a wireless or wired LAN (Local Area Network) router.

As described above, the long-range transmission unit Q310 is configured to transmit the second signal S2 to the management device R via long-range communication. The second signal S2 typically contains information recorded in the memory unit Q130. That is, the second signal S2 may, for example, contain the second identification information assigned to each of the pedestals Q1. In addition, the second signal S2 may contain information included in the first signal S1. That is, the second signal S2 may contain information related to the gas storage container P connected to the pedestal Q1, such as the first identification information. Alternatively, the second signal S2 may contain information related to the gas remaining amount and/or battery remaining amount of the gas storage container P connected to the pedestal Q1. Additionally, the second signal S2 may contain information related to an impact applied to the gas storage container P connected to the pedestal Q1.

The second signal S2 may contain position information of the pedestal Q1. This position information may, for example, be recorded in the memory unit Q130 at the time of shipment or installation as the position where the pedestal Q1 is to be fixed. Alternatively, the position information of the pedestal Q1 may be determined by a position sensor (not shown) configured to enable GPS communication. That is, the pedestal Q1 may be equipped with a memory unit Q130 in which information about the installation position is pre-input, or it may further include a position sensor configured to enable GPS communication. Alternatively, the position information of the pedestal Q1 may be recorded in the management device R, linked with the second identification information. That is, the management device R may be configured to recognize the position of the pedestal Q1 based on the second signal S2 containing the second identification information. Here, the term "information about the installation position" or "position information" refers to information regarding the location of the pedestal Q1 or the relay device Q, and may include, for example, the name of the building, the floor number (or altitude), the name of the room, and specific fixed locations within the room (such as latitude and longitude), etc. In this way, the "information about the installation position" or "position information" may include not only two-dimensional location information (such as latitude and longitude) of the pedestal Q1 or relay device Q, but also three-dimensional location information that includes height-related information (such as floor number or altitude). In the latter case, even if multiple pedestals Q1 or relay devices Q and/or gas storage containers P exist at the same two-dimensional location (such as latitude and longitude), the management device R can distinguish them from each other based on the differences in their height positions (such as floor number or altitude). For example, in such a case, it may become possible to distinguish gas storage containers P located at the same position on different floors from each other. That is, in such a case, it may become possible to perform more precise location management compared to a case where each gas storage container P is equipped with a GPS module.

The long-range receiving unit Q320 is configured to receive signals from the management device R. When the pedestal Q1 is equipped with the long-range receiving unit Q320, bidirectional communication becomes possible between the pedestal Q1 and the management device R. Adopting such a configuration may enable control of the pedestal Q1 by the management device R, and/or control of the gas storage container P through the pedestal Q1 by the management device R. In such a case, for example, it becomes possible for the management device R to instruct the pedestal Q1 to transmit the second signal S2. Alternatively, in such a case, it becomes possible for the management device R to instruct, through the pedestal Q1, the gas storage container P to transmit the first signal S1.

As described later, the gas storage container P may have flat top and bottom surfaces, making it vertically stackable. In this case, the pedestal Q1 may be configured in such a way that it can support the gas storage container P with multiple gas storage containers P stacked vertically. Furthermore, in this case, the pedestal Q1 may be configured to receive information regarding the stacking position of the gas storage container P on the pedestal Q1 via short-range communication. In such a case, short-range communication between the gas storage container P and the pedestal Q1 may be performed through data communication between the power receiving member P150 and the power transmission member Q150. Additionally, the pedestal Q1 may be configured to transmit information regarding the stacking position of the gas storage container P on the pedestal Q1 to the management device R via long-range communication. That is, the second signal S2 may contain information regarding the stacking position of the gas storage container P on the pedestal Q1. Here, the term "information regarding the stacking position" refers to information about which specific tier a particular gas storage container P is stacked on in a particular pedestal Q1. That is, by adopting such a configuration, the management device R can grasp not only the two-dimensional position information of the gas storage container P but also three-dimensional position information including height-related data.

FIG. 5 is a configuration diagram of a relay device (transport relay device) according to another embodiment of the present invention. That is, the relay device Q shown in Figure 5 is a transportation relay device Q2 used when transporting the gas storage container P. Note that the diagram in the lower right of Figure 5 shows the transportation relay device Q2 placed on the truck bed, but this is just one example, and any configuration of the transportation relay device Q2 can be used as the relay device Q. The transportation relay device Q2 is a relay device used when transporting the gas storage container P, and is typically installed on a transport vehicle. The transport vehicle itself may also be used as the transportation relay device Q2.

The transportation relay device Q2 typically includes a housing, and a short-range receiving unit Q220 and a long-range transmission unit Q310 installed therein. The transportation relay device Q2 may be connected to a power source Q140, such as the battery of the transport vehicle. The transportation relay device Q2 may be installed in the interior of the transport vehicle. The transport vehicle may, for example, be an automobile, a train, or an aircraft. The transport vehicle may, for example, be a freight truck, a freight train, or a cargo aircraft. As explained below, the transportation relay device Q2 typically includes a position sensor Q160, and is configured to track its position information via GPS satellites or the like.

The transportation relay device Q2 shown in FIG. 5 includes an IoT module Q100. The IoT module Q100 includes a control unit Q120, a memory unit Q130, a power source or battery Q140, a position sensor Q160, a short-range communication module Q200, and a long-range communication module Q300. The short-range communication module Q200 includes a short-range transmission unit Q210 and a short-range receiving unit Q220. The long-range communication module Q300 comprises a long-range transmission unit Q310 and a long-range receiving unit Q320.

The control unit Q120 is, for example, a CPU. The control unit Q120 is responsible for controlling communication and other functions within the transportation relay device Q2. The control unit Q120 may be configured to calculate the gas remaining amount of the gas storage container P based on the information included in the first signal S1.

The memory unit Q130 is connected to the control unit Q120. A program executed by the control unit Q120 is recorded in the memory unit Q130, for example. This program is, for example, a computer program for causing the control unit Q120 to perform a function of transmitting the second signal S2 from the relay device Q to the management device R.

Typically, the memory unit Q130 records the second identification information for identifying the transportation relay device Q2, which is recorded during the manufacturing or shipment of the transportation relay device Q2. The second identification information is, for example, an identification ID such as a lot number. The memory unit Q130 may further record at least one piece of information selected from the installation vehicle, the manufacturing date, the shipment date, or the like of the transportation relay device Q2. Alternatively, these additional pieces of information may be recorded in the management device R in association with the second identification information. Additionally, the second identification information may be recorded in the SIM card of the long-range communication module Q300, as described later.

The memory unit Q130 typically stores information related to the gas storage container P that is connected in close proximity. That is, the memory unit Q130 stores the first signal S1 and/or information processed therefrom. For example, the memory unit Q130 may store raw data (measurement time and measured value) measured by the sensor P110 of the gas storage container P. Alternatively, the memory unit Q130 may store an estimated value of the remaining gas, calculated by the control unit P120 of the gas storage container P based on the above raw data. That is, the memory unit Q130 may store information related to the gas remaining amount in the gas storage container P. Alternatively, the memory unit Q130 may store information related to an impact applied to the gas storage container P. The memory unit Q130 may also store information related to the battery remaining amount of the gas storage container P. These pieces of information related to the gas storage container P may be transferred directly to the management device R as part or all of the second signal S2 without being recorded in the memory unit Q130.

Typically, the memory unit Q130 may continuously record position information (measurement time and coordinates) measured by the position sensor Q160, as described later. Additionally, the memory unit Q130 may record information regarding the remaining amount of the battery Q140, as described later.

The battery or power source Q140 may, for example, be a rechargeable battery or an external power source. The battery or power source Q140 is responsible for supplying power to the transportation relay device Q2.

The position sensor Q160 is typically a GPS module. By using the position sensor Q160, it becomes possible to track the position information of the transportation relay device Q2. As a result, it becomes possible to indirectly track the position information of the gas storage container P, which is connected to the transportation relay device Q2 via short-range communication. That is, by adopting such a configuration, the management device R can perform transportation management of the gas storage container P through the transportation relay device Q2.

The short-range communication module Q200 is connected to the control unit Q120. The short-range communication module Q200 is a module for performing short-range communication with the gas storage container P. The short-range communication module Q200 is typically a Bluetooth module, and through pairing with the gas storage container P, it enables short-range communication between the gas storage container P and the transportation relay device Q2.

The short-range transmission unit Q210 is configured to be capable of transmitting signals to the gas storage container P. When the transportation relay device Q2 is equipped with a short-range transmission unit Q210, bidirectional communication becomes possible between the gas storage container P and the transportation relay device Q2. Adopting such a configuration may enable control of the gas storage container P by or through the transportation relay device Q2. In such a case, for example, it becomes possible for the transportation relay device Q2 to instruct the gas storage container P to transmit the first signal S1.

The short-range receiving unit Q220 is configured to receive the first signal S1 from the gas storage container P via short-range communication. The first signal S1 is as previously described. The first signal S1 may be temporarily recorded in the memory unit Q130 or may be transferred directly to the management device R as part or all of the second signal S2 via the long-range communication module Q300 described later.

The long-range communication module Q300 is connected to the control unit Q120. The long-range communication module Q300 is a module for performing long-range communication with the management device R. As the long-range communication module Q300, a known configuration such as a SIM card can be used, for example. The long-range communication module Q300 may be configured to communicate with the management device R via a wireless or wired LAN router.

As described above, the long-range transmission unit Q310 is configured to transmit the second signal S2 to the management device R via long-range communication. The second signal S2 typically contains information recorded in the memory unit Q130. That is, the second signal S2 may, for example, contain the second identification information assigned to each of the transportation relay devices Q2. In addition, the second signal S2 may contain information included in the first signal S1. That is, the second signal S2 may contain information related to the gas storage container P connected to the transportation relay device Q2, such as the first identification information. Alternatively, the second signal S2 may contain information related to the gas remaining amount and/or battery remaining amount of the gas storage container P connected to the transportation relay device Q2. Additionally, the second signal S2 may contain information related to an impact applied to the gas storage container P connected to the transportation relay device Q2.

The second signal S2 may contain position information of the transportation relay device Q2. This position information is typically determined by the position sensor Q160. As a result, the management device R can indirectly track the position information of the gas storage container P, which is connected to the transportation relay device Q2 via short-range communication. That is, by adopting such a configuration, the management device R can perform transportation management of the gas storage container P through the transportation relay device Q2.

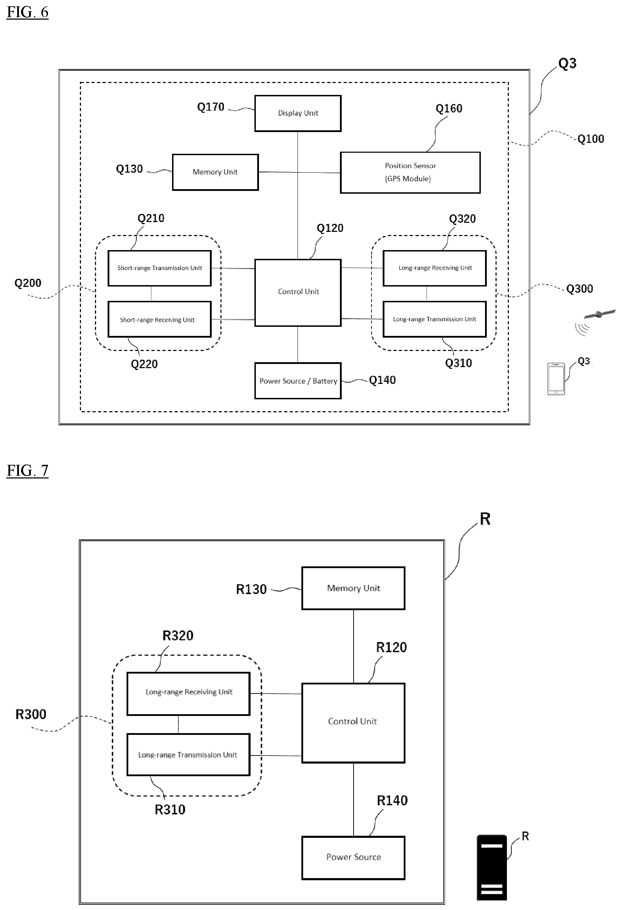

FIG. 6 is a configuration diagram of a relay device (information processing terminal) according to another embodiment of the present invention. That is, the relay device Q shown in FIG. 6 is an information processing terminal Q3. Note that in the lower right of FIG. 6, a smartphone is depicted as the information processing terminal Q3, but this is merely an example, and any configuration of an information processing terminal Q3 may be used as the relay device Q.

The information processing terminal Q3 is, for example, a general-purpose device such as a smartphone, tablet, PDA (Personal Digital Assistant), or PC (Personal Computer). The information processing terminal Q3 may be a personal device owned by the administrator, transporter, user, or others involved with the gas storage container P. In such a case, the information processing terminal Q3 typically has an application downloaded and installed to control communication with the gas storage container P and/or the management device R. Alternatively, the information processing terminal Q3 may be a dedicated device for managing the gas storage container P. In this case, the above-mentioned application may be pre-installed in the information processing terminal Q3. It is preferred that the information processing terminal Q3 be a portable information processing terminal.

The information processing terminal Q3 shown in FIG. 6 includes an IoT module Q100. The IoT module Q100 includes a control unit Q120, a memory unit Q130, a power source or battery Q140, a position sensor Q160, a display unit Q170, a short-range communication module Q200, and a long-range communication module Q300. The short-range communication module Q200 includes a short-range transmission unit Q210 and a short-range receiving unit Q220. The long-range communication module Q300 comprises a long-range transmission unit Q310 and a long-range receiving unit Q320.

The control unit Q120 is, for example, a CPU. The control unit Q120 is responsible for controlling communication and other functions in the information processing terminal Q3. The control unit Q120 may be configured to calculate the gas remaining amount of the gas storage container P based on the information included in the first signal S1.

The memory unit Q130 is connected to the control unit Q120. A program executed by the control unit Q120 is recorded in the memory unit Q130, for example. This program is, for example, a computer program for causing the control unit Q120 to perform a function of transmitting the second signal S2 from the relay device Q to the management device R. More specifically, the memory unit Q130 stores, for example, an application for controlling communication with the gas storage container P and/or the management device R. The memory unit Q130 records second identification information for identifying the information processing terminal Q3, typically through the above-mentioned application. This second identification information is, for example, an identification ID uniquely assigned to each terminal. The memory unit Q130 may further store information such as user information of the information processing terminal Q3. Alternatively, these additional pieces of information may be recorded in the management device R in association with the second identification information. Additionally, the second identification information may be recorded in the SIM card of the long-range communication module Q300, as described later.

The memory unit Q130 typically stores information related to the gas storage container P that is connected in close proximity. That is, the memory unit Q130 stores the first signal S1 and/or information processed therefrom. For example, the memory unit Q130 may store raw data (measurement time and measured value) measured by the sensor P110 of the gas storage container P. Alternatively, the memory unit Q130 may store an estimated value of the remaining gas, calculated by the control unit P120 of the gas storage container P based on the above raw data. That is, the memory unit Q130 may store information related to the gas remaining amount in the gas storage container P. Alternatively, the memory unit Q130 may store information related to an impact applied to the gas storage container P. The memory unit Q130 may also store information related to the battery remaining amount of the gas storage container P. These pieces of information related to the gas storage container P may be transferred directly to the management device R as part or all of the second signal S2 without being recorded in the memory unit Q130.

Typically, the memory unit Q130 may continuously record position information (measurement time and coordinates) measured by the position sensor Q160, as described later. Additionally, the memory unit Q130 may record information regarding the remaining amount of the battery Q140, as described later.

The battery or power source Q140 may, for example, be a rechargeable battery or an external power source. The battery or power source Q140 is responsible for supplying power to the information processing terminal Q3.

The position sensor Q160 is typically a GPS module. By using the position sensor Q160, it becomes possible to track the position information of the information processing terminal Q3. As a result, it becomes possible to indirectly track the position information of the gas storage container P that is connected to the information processing terminal Q3 via short-range communication. That is, by adopting such a configuration, the management device R can perform position management of the gas storage container P through the information processing terminal Q3.

The display unit Q170 is, for example, a display. The display unit Q170 may display, for example, the contents of the above-mentioned application. The user of the information processing terminal Q3 can, for example, control the interconnection between the information processing terminal Q3 and the gas storage container P and/or the management device R based on the content displayed on the display unit Q170.

The short-range communication module Q200 is connected to the control unit Q120. The short-range communication module Q200 is a module for performing short-range communication with the gas storage container P. The short-range communication module Q200 is typically a Bluetooth module, and through pairing with the gas storage container P, it enables short-range communication between the gas storage container P and the information processing terminal Q3.

The short-range transmission unit Q210 is configured to be capable of transmitting signals to the gas storage container P. When the information processing terminal Q3 is equipped with a short-range transmission unit Q210, bidirectional communication becomes possible between the gas storage container P and the information processing terminal Q3. Adopting such a configuration may enable control of the gas storage container P by or through the information processing terminal Q3. In such a case, for example, it becomes possible for the information processing terminal Q3 to instruct the gas storage container P to transmit the first signal S1.

The short-range receiving unit Q220 is configured to receive the first signal S1 from the gas storage container P via short-range communication. The first signal S1 is as previously described. The first signal S1 may be temporarily recorded in the memory unit Q130 or may be transferred directly to the management device R as part or all of the second signal S2 via the long-range communication module Q300 described later.

The long-range communication module Q300 is connected to the control unit Q120. The long-range communication module Q300 is a module for performing long-range communication with the management device R. As the long-range communication module Q300, a known configuration such as a SIM card can be used, for example. The long-range communication module Q300 may be configured to communicate with the management device R via a wireless or wired LAN router.

As described above, the long-range transmission unit Q310 is configured to transmit the second signal S2 to the management device R via long-range communication. The second signal S2 typically contains information recorded in the memory unit Q130. That is, the second signal S2 may, for example, contain the second identification information assigned to each of the information processing terminals Q3. In addition, the second signal S2 may contain information included in the first signal S1. That is, the second signal S2 may contain information related to the gas storage container P connected to the information processing terminal Q3, such as the first identification information. Alternatively, the second signal S2 may contain information related to the gas remaining amount and/or battery remaining amount of the gas storage container P connected to the information processing terminal Q3. Additionally, the second signal S2 may contain information related to an impact applied to the gas storage container P connected to the information processing terminal Q3.

The second signal S2 may contain position information of the information processing terminal Q3. This position information is typically determined by the position sensor Q160. As a result, the management device R can indirectly track the position information of the gas storage container P, which is connected to the information processing terminal Q3 via short-range communication. That is, by adopting such a configuration, the management device R can perform position management of the gas storage container P through the information processing terminal Q3.

Multiple types of relay devices may also be used in combination as the relay device Q. For example, at least two relay devices selected from the group consisting of the pedestal Q1, the transportation relay device Q2, and the information processing terminal Q3 may be used as the relay device Q. That is, the gas storage container management system M may include at least two relay devices Q selected from the group consisting of the pedestal Q1, the transportation relay device Q2, and the information processing terminal Q3. For example, the management system M may include the pedestal Q1 and the transportation relay device Q2; the pedestal Q1 and the information processing terminal Q3; or the pedestal Q1, the transportation relay device Q2, and the information processing terminal Q3. Using multiple types of relay devices Q in combination enables seamless management of the gas storage container P. For example, the pedestal Q1 may be used at the time of shipment and/or use of the gas storage container P, and the transportation relay device Q2 may be used during transportation.

The relay device Q typically includes a first communication unit for performing short-range communication with the gas storage container P, and a second communication unit for performing long-range communication with the management device R. The first communication unit includes, for example, the above-mentioned short-range receiving unit Q210, and typically includes the short-range communication module Q200. The second communication unit includes, for example, the above-mentioned long-range transmission unit Q320, and typically includes the long-range communication module Q300.

Additionally, as described above, the relay device Q may include a power transmission member for supplying power to the gas storage container P. By adopting such a configuration, the relay device Q can also be used as a charger for the gas storage container P. In this case, the relay device Q includes a power transmission member Q150, a short-range receiving unit Q220, and a long-range transmission unit Q310. Note that the relay device Q equipped with the power transmission member Q150 does not necessarily have to take the form of the pedestal Q1.

Furthermore, the second signal S2 from the relay device Q to the management device R may contain position information of the relay device Q. In this case, it is preferable that the relay device Q further includes either a memory unit Q130 in which information about the installation position is pre-input, or a position sensor Q160 configured to enable GPS communication. Alternatively, information about the installation position of the relay device Q may be recorded in the management device R in association with the second identification information. That is, the management device R may be configured to recognize the position of the relay device Q based on the second signal S2 containing the second identification information. By adopting such a configuration, the management device R can indirectly perform position management of the gas storage container P based on the position information of the relay device Q. In particular, when the relay device Q has pre-input installation position information, or when the installation position information of the relay device Q is recorded in the management device R in association with the second identification information, the "installation position information" or "position information" of the relay device Q may include not only two-dimensional location information but also three-dimensional location information that includes height-related data. For example, the "installation position information" or "position information" of the relay device Q may include, in addition to two-dimensional location information (such as latitude and longitude), height-related information such as the altitude of the installation site or the floor number on which the relay device Q is installed within a building. In this case, the management device R can obtain not only the two-dimensional position information of the relay device Q and/or the gas storage container P, but also three-dimensional position information that includes height-related data. That is, in such a case, even when multiple relay devices Q and/or gas storage containers P exist at the same two-dimensional location (e.g., latitude and longitude), the management device R can distinguish them from one another based on differences in the height position (e.g., altitude or floor number) of the relay devices Q. Specifically, in such a case, it may become possible to distinguish gas storage containers P located at the same position on different floors from each other. That is, in such a case, it may become possible to perform more precise location management compared to a case where each gas storage container P is equipped with a GPS module.

FIG. 7 is a configuration diagram of a management device according to one embodiment of the present invention. In the lower right of FIG. 7, the management device R is depicted as a server, but this is merely an example. Any configuration of the management device R may be used, as long as it includes a long-range receiving unit R320. The management device R may be a cloud server. The administrator of the management system M can perform integrated management of the gas storage container P (and the relay device Q) by, for example, accessing the management device R through a client. The management device R may further include components not shown in FIG. 7.

The management device R shown in FIG. 7 includes a control unit R120, a memory unit R130, a power source R140, and a long-range communication unit R300. The long-range communication unit R300 includes a long-range transmission unit R310 and a long-range receiving unit R320.

The control unit R120 is, for example, a CPU. The control unit R120 may be configured to calculate the gas remaining amount of the gas storage container P based on the information contained in the second signal S2.

The memory unit R130 is connected to the control unit R120. The memory unit R130 stores, for example, a program executed by the control unit R120.

The memory unit R130 typically records information related to the relay device Q connected via long-range communication, and the gas storage container P connected to the relay device Q via short-range communication. That is, the memory unit R130 records the second signal S2 and/or information processed therefrom. For example, the memory unit R130 may store raw data (measurement time and measured value) measured by the sensor P110 of the gas storage container P. Alternatively, the memory unit R130 may record an estimated value of the gas remaining amount, calculated based on the above raw data by the control unit P120 of the gas storage container P or by the control unit Q120 of the relay device Q. That is, the memory unit R130 may store information related to the gas remaining amount in the gas storage container P. Alternatively, the memory unit R130 may store information related to an impact applied to the gas storage container P. The memory unit R130 may also store information related to the battery remaining amount of the gas storage container P. Furthermore, the memory unit R130 may record position information of the relay device Q.

The power source Q140 is typically an external power source, and serves to supply power to the management device R.

The long-range communication unit R300 is connected to the control unit R120. The long-range communication unit R300 is a unit for performing long-range communication with the relay device Q. The long-range communication unit R300 is configured to perform long-range communication using the same communication standard as the long-range communication module Q300 of the relay device Q. As the long-range communication unit R300, an existing configuration commonly used in general servers or computers may be adopted.

The long-range transmission unit R310 is configured to be capable of transmitting signals to the relay device Q. When the management device R is equipped with the long-range transmission unit R310, bidirectional communication becomes possible between the relay device Q and the management device R. Such a configuration may enable control of the relay device Q and/or the gas storage container P by the management device R. In such a case, for example, it becomes possible for the management device R to instruct the relay device Q to transmit the second signal S2. Alternatively, in such a case, it becomes possible for the management device R to instruct, through the relay device Q, the gas storage container P to transmit the first signal S1.

The long-range receiving unit R320 is configured to receive the second signal S2 from the relay device Q via long-range communication. The second signal S2 is as described above. This second signal S2 is typically recorded in the memory unit R130.

As described above, the relay device Q can receive the first signal S1 from a gas storage container P that is within short-range communication range. Also, the management device R can receive the second signal S2 from the relay device Q. In this way, in the management system M, the management device R can manage the gas storage container P via the relay device Q. As previously described, by adopting such a configuration, the number of modules required in the gas storage container P can be reduced compared to the case in which the gas storage container P is directly managed by the management device R. This makes it possible to reduce the power consumption and the cost of the gas storage container P.

That is, the gas storage container management method according to one embodiment of the present invention includes transmitting a first signal S1 from the gas storage container P to the relay device Q via short-range communication, and transmitting a second signal S2 from the relay device Q to the management device R via long-range communication.

Here, it is preferable that the first signal S1 includes first identification information assigned to each of the gas storage containers P, and that the second signal S2 includes the first identification information and second identification information assigned to each of the relay devices Q. The gas storage container management method may include inputting the first identification information into each of the gas storage containers P. In this case, the first identification information is typically recorded in the memory unit P130 of the gas storage container P. The gas storage container management method may include inputting the second identification information into each of the relay devices Q. In this case, the second identification information is typically recorded in the memory unit Q130 of the relay device Q.

Moreover, in the above-described management method, the first signal S1 may include information regarding the gas remaining amount in the gas storage container P. The first signal S1 may include information regarding an impact applied to the gas storage container P. The first signal S1 may include information regarding the remaining battery level of the gas storage container P. The second signal S2 may include location information of the relay device Q. The first signal S1 and the second signal S2 may include any optional information other than the above.

As described above, the configuration of the gas storage container P is not particularly limited. The gas storage container P may, for example, have a flat top and bottom surface, and be vertically stackable. In particular, the gas storage container P may include a casing having a flat top and bottom surface and being vertically stackable, and a gas container P10 installed within the casing. In this case, the short-range transmission unit P210 may be disposed between the casing and the gas container P10.

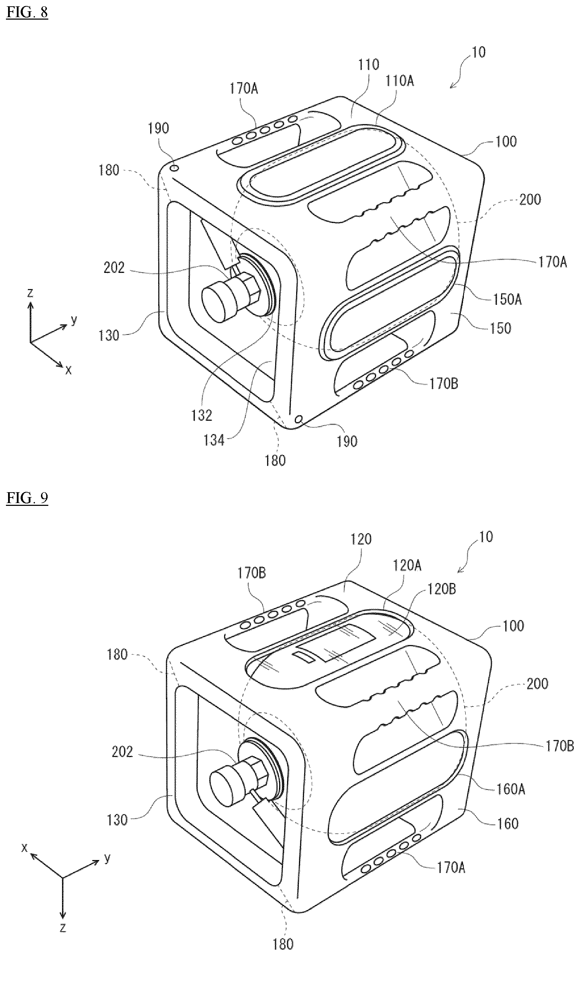

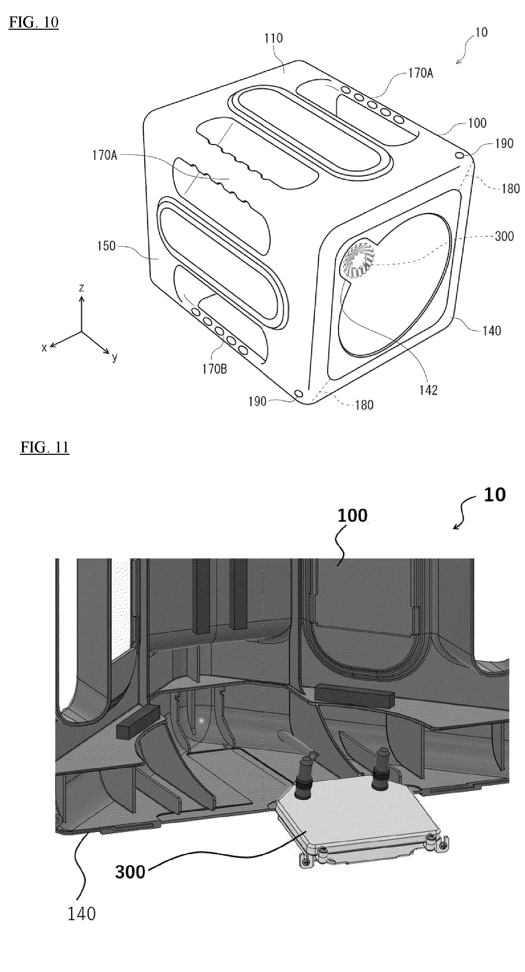

FIG. 8 is a perspective view of a gas storage container according to one embodiment of the present invention as viewed from the top. FIG. 9 is a perspective view of a gas storage container according to one embodiment of the present invention as viewed from the bottom. FIG. 10 is a perspective view of a gas storage container according to one embodiment of the present invention as viewed from the back. The gas storage container 10 shown in FIGS. 8 to 10 includes a casing 100, a gas container 200, and an IoT module 300. The gas storage container 10 can be used as the gas storage container P. The gas container 200 corresponds to the gas container P10, and the IoT module 300 corresponds to the IoT module P100.

In this embodiment, casing 100 is substantially rectangular in shape and includes an upper surface 110, a lower surface 120, a front surface 130, a back surface 140, a right side surface 150, and a left side surface 160. That is, the casing 100 has an upper surface 110, a lower surface 120, and four side surfaces 130 to 160. Note that the expressions such as "upper surface," "lower surface," "front surface," "back surface," "right side surface," "left side surface," and "side surface" are only relative and do not limit the actual usage of the gas storage container 10. For example, it is also possible to use the gas storage container 10 with the "front surface" facing upward.

The upper surface 110 and the lower surface 120 are substantially flat. Thereby, the casings 100 can be stacked vertically. Adopting such a configuration makes it possible to easily and effectively transport and install the gas storage container.

The upper surface 110 includes a protrusion (a convex portion) 110A. The lower surface 120 includes a recess (a concave portion) 120A having a shape corresponding to the protrusion 110A. Typically, the recess 120A is configured to fit into the protrusion 110A. By employing such a configuration, it becomes possible to stack the casings 100 in the vertical direction more stably. The protrusion 110A and the recess 120A may be omitted. Note that when the protrusion and the recess "fit" here, it is not necessary for them to be physically fixed to each other, but it is sufficient if the shapes of both are spatially fitted to each other.

In this embodiment, the recess 120A is provided with a window 120B for making the gas container 200 visible from the outside. In the example shown in FIG. 2, the label attached to the gas container 200 can be visually recognized through the window 120B. By adopting such a configuration, it becomes possible to efficiently acquire information regarding the gas container 200 without the need for removing the casing 100 or checking with an electronic device using the IoT module 300. The window 120B may be configured so as to be insertable into the casing 100.

The window 120B is typically transparent or translucent, preferably transparent, and more preferably colorless and transparent. The window 120B may be hollow or may include a transparent or translucent member. In the latter case, the material of the transparent or translucent member that may be fitted into the window 120B is, for example, plastic or glass, preferably plastic. When the window 120B includes a transparent or translucent member, it is possible to minimize the decrease in the strength of the casing 100 due to the provision of the window 120B. The window 120B may be omitted.

The front surface 130 is substantially flat and includes a hole 132. The hole 132 has the role of exposing an outlet 202 of the gas container 200 to the outside. The hole 132 may be provided on a surface other than the front surface 130. Placing the hole 132 on at least one side surface rather than on the upper surface 110 or the lower surface 120 allows the gas storage containers 10 to be stacked one above the other even when the outlet 202 is equipped with a valve and/or regulator.

The front surface 130 further includes a dent 134 to prevent the outlet 202 from protruding from the outer surface of the casing 100. By adopting such a configuration, the occupied volume per piece can be reduced when carrying the gas storage containers 10. The outlet 202 is typically equipped with a valve. Additionally, when the gas storage container 10 is in use, a regulator (not shown) is typically attached to the valve. The dent 134 provided on the front surface 130 is typically constructed so that the outlet 202 does not protrude from the outer surface of the casing 100 when the outlet 202 is fitted with a valve but not a regulator. The dent 134 may be omitted.

The back surface 140 is substantially flat and is opposed to the front surface 130. A power receiving member of the IoT module 300 is installed inside the casing 100 near the rear surface 140 of the gas storage container 10. A recess 142 is provided on the back surface 140 at a position corresponding to the power receiving member of the IoT module 300. The configuration of the IoT module 300 is, for example, as described above as the IoT module P100. The recess 142 may be omitted.

The right side surface 150 is substantially flat. The right side surface 150 is provided with a protrusion 150A. The shape of the protrusion 150A is typically the same as the shape of the protrusion 110A. The protrusion 150A may be omitted.

The left side surface 160 is substantially flat and is opposed to the right side surface 150. The left side surface 160 is provided with a recess 160A. The shape of the recess 160A is typically the same as the shape of the recess 120A, except that it does not include the window 120B. That is, the recess 160A has a shape corresponding to the protrusion 150A. By employing such a configuration, it becomes possible to efficiently arrange the casings 100 in the lateral direction as well. The recess 160A may be omitted.

The casing 100 has a first grip 170A on the outer edge between the upper surface 110 and the right side surface 150. The casing 100 also has a first grip 170A on the outer edge between the upper surface 110 and the left side surface 160. Adopting such a configuration makes it easier for a user to transport the gas storage container 10. Further, when such a configuration is adopted, fixing of the gas storage container 10 becomes easier, as will be described later. Furthermore, when the grip(s) is formed by providing a hollow part on the outer edge as shown in FIGS. 8 to 10, it is possible to yet reduce the weight of the gas storage container 10. The first grip(s) 170A may be omitted.

The casing 100 has a second grip 170B on the outer edge between the lower surface 120 and the right side surface 150. The casing 100 also has a second grip 170B on the outer edge between the lower surface 120 and the left side surface 160. Adopting such a configuration makes it easier for a user to transport and secure the gas storage container 10. Also, when the grip(s) is formed by providing a hollow part on the outer edge as shown in FIGS. 8 to 10, it is possible to further reduce the weight of the gas storage container 10. The second grip(s) 170B may be omitted.

The casing 100 is configured to be able to be divided into two parts along a diagonal connecting surface 180. In the example shown in FIGS. 8 to 10, one portion includes the upper surface 110, the right side surface 150, a half of the front surface 130, and a half of the back surface 140. The other portion includes a lower surface 120, a left side surface 160, the remaining half of the front surface 130, and the remaining half of the back surface 140. These two parts are joined by screws (not shown) through screw holes 190. At this time, the casing 100 can be prevented from being easily disassembled by the user by forming the screw tool hole into a special shape. The connecting surface 180 and the screw hole 190 may be omitted.

The parts constituting the casing 100 may be joined by other methods. If the casing 100 is configured to be divisible, the casing 100 can be replaced relatively easily by an administrator of the gas storage container 10. There is no restriction on the method of dividing the casing 100.

The material of the casing 100 is not particularly limited and can be appropriately selected depending on the required strength, desired weight, ease of forming, degree of electrical interference during the contactless power supply, and the like. The material of the casing 100 is, for example, plastic, fiber-reinforced plastic, metal, or an alloy, preferably plastic or fiber-reinforced plastic.

In the configurations shown in FIGS. 8 to 10, the casing 100 has a rectangular parallelepiped shape, but the shape of the casing 100 is not particularly limited as long as it satisfies the above requirements regarding the upper and lower surfaces. The casing 100 has, for example, a cylindrical shape or a prismatic shape, preferably a quadrangular prism, a pentagonal prism, or a hexagonal prism shape, and more preferably a quadrangular prism or a hexagonal prism shape. When the casing 100 has a prismatic shape, it is preferable that the casing 100 has a regular polygonal column shape. The casing 100 is more preferably rectangular or cubic in shape, especially preferably rectangular.

Furthermore, in the configurations shown in FIGS. 8 to 10, all of the plurality of side surfaces 130 to 160 are substantially flat. In this case, since a plurality of gas storage containers 10 can be efficiently arranged, the effective volume occupied during transportation and use can be particularly reduced. However, the plurality of side surfaces 130 to 160 do not necessarily have to be flat. For example, in a four-sided configuration as shown in FIGS. 8 to 10, it is possible to employ a configuration in which the front surface 130 and back surface 140 are not flat, but the right side surface 150 and left side surface 160 are substantially flat.

In the configuration shown in FIGS. 8 to 10, the upper surface 110 includes a protrusion 110A, and the lower surface 120 includes a recess 120A corresponding to the protrusion 110A, but there is no particular restriction on the configuration of these protrusions and recesses. For example, the upper surface 110 may include a recess, and the lower surface may include a protrusion corresponding to the recess. The shapes of the protrusion and the recess are also not particularly limited as long as the pairs provided at corresponding locations correspond to one another. These protrusions and recesses may be omitted.

In the configuration shown in FIGS. 8 to 10, the right side surface 150 includes a protrusion 150A, and the left side surface 160 opposing to it includes a recess 160A corresponding to the protrusion 150A, but there is no particular restriction on the configuration of these protrusions and recesses. For example, the right side surface 150 may include a recess, and the left side surface 160 may include a protrusion corresponding to the recess. The shapes of the protrusion and the recess are also not particularly limited as long as the pairs provided at corresponding locations correspond to one another. These protrusions and recesses may be omitted.

In the configuration shown in FIGS. 8 to 10, a window 120B is provided in the recess 120A, but there are no particular restrictions on the position of such a window as long as the function of making the gas container 200 visible from the outside can be ensured. For example, the window may be provided in at least one of the other protrusions and/or recesses mentioned above. Alternatively, the window may be provided in a portion of the casing 100 other than the protrusions and/or the recesses. A plurality of windows may be provided at multiple locations on the casing 100. In addition, when providing a window in one of a protrusion and a recess, it is more preferable to provide a window in a recess from a viewpoint of the mechanical strength and breakage possibility of the window. Such a window may be omitted.

In the configuration shown in FIGS. 8 to 10, the first grip 170A and the second grip 170B are provided, but there is no particular restriction on the configuration of the grip parts. The grip(s) may be provided at other locations on the casing 100. However, as described above, if the grip(s) is formed by providing a hollow part on the outer edge of the casing 100, it becomes possible to more effectively utilize the part of the casing 100 that does not include the gas container 200 (i.e. the dead zone). The grip(s) may be omitted.

In the embodiment shown in FIGS. 8 to 10, the gas container 200 is installed inside the casing 100. In FIGS. 1 and 2, parts of the gas container 200 that are not visible from the outside are drawn with broken lines. Similarly, in FIGS. 8 and 9, the portion of the gas container 200 that is visible from the outside is drawn with a solid line. In FIG. 10, the illustration of the gas container 200 is omitted.

The gas container 200 includes a gas outlet 202. The gas outlet 202 usually also serves as a gas inlet. The outlet 202 is exposed to the outside through the hole 132 of the casing 100.

The gas container 200 typically has a rounded shape. By adopting such a configuration, the pressure resistance performance of the gas container 200 can be optimized. The gas containers 200 themselves cannot normally be stacked on top of each other. However, since the gas containers 200 are housed within the casing 100, the gas storage containers 10 can be stacked regardless of the shape of the gas containers 200.

Any material can be used for the gas container 200. The gas container 200 is, for example, made of fiber-reinforced plastic, metal or alloy, or comprises fiber-reinforced plastic and metal or alloy. Alternatively, the gas container 200 may be made of duralumin. The material used for the gas container 200 can be appropriately selected in consideration of formability and weight. The material of gas container 200 is typically different than the material of casing 100. Therefore, it is possible to adjust the strength, weight, pressure resistance, appearance, and the like of the entire gas storage container 10 by independently optimizing the material for the casing 100 and the material of the gas container 200.

There is no restriction in the kind of gas to be stored in the gas container 200. Examples of such gases include nitrogen; oxygen; air; carbon dioxide; rare gases such as helium, neon, argon, krypton, and xenon; hydrogen; saturated hydrocarbons such as methane, ethane, and propane; acetylene; fluorocarbons such as difluoromethane; LP gas; natural gas; monosilane; theos; dichlorosilane; arsine; phosphine; diborane; boron trichloride; carbon tetrafluoride; nitrogen trifluoride; hydrogen bromide; chlorine; tungsten hexafluoride; hydrogen selenide; monogermane; ethylene oxide; nitrous oxide; and ammonia. Among these, it is particularly preferable to use a gas selected from the group consisting of nitrogen, oxygen, air, argon, xenon, fluorocarbon, carbon dioxide, methane, and hydrogen. The gas stored in the gas container 200 may be liquefied.

The gas container 200 may further include a porous material therein. In such a case, the amount of gas stored in the gas container 200 can be increased. When filling the gas container 200 with a porous material, the filling rate F of the porous material is, for example, 60% or more, preferably 65% or more, and more preferably 70% or more. In such a case, the effect of increasing the amount of gas stored by filling the porous material becomes more remarkable. The upper limit of the filling rate is 100%, but the filling rate may be slightly lowered from the viewpoint of gas filling efficiency, exhaust heat, and the like. For example, the filling rate of the porous material may be 99% or less. Further, the filling rate may be further reduced in consideration of an increase in the weight of the gas storage container 10 due to the weight of the porous material itself.

Examples of the porous material include a metal-organic framework (MOF), a covalent organic framework (COF), activated carbon, zeolite, and mesoporous silica. It is particularly preferable to use the MOF as the porous material. A plurality of types of porous materials may be used in combination.

When the MOF is employed as the porous material, any types of MOFs can be used. Appropriately combining the type and coordination number of the metal ion with the type and topology of the multidentate ligand leads to a MOF with a desired structure.

The metal elements in the MOF can be, for example, any elements belonging to alkali metals (Group 1), alkaline earth metals (Group 2), or transition metals (Groups 3 to 12). The multidentate ligand in the MOF typically is an organic ligand, examples of which include carboxylate anion and heterocyclic compound. Examples of the carboxylic acid anion include dicarboxylic acid anion and tricarboxylic acid anion. Specific examples include anions of citric acid, malic acid, terephthalic acid, isophthalic acid, trimesic acid, and derivatives thereof. Examples of the heterocyclic compound include bipyridine, imidazole, adenine, and derivatives thereof. Alternatively, the ligand may be an amine compound, a sulfonate anion, or a phosphate anion. The MOF may further contain monodentate ligand(s).

The combination of the metal and the ligand forming the MOF can be appropriately determined according to the expected function and the desired pore size. The MOF may contain two or more types of metal elements, and may contain two or more types of ligands. The MOF can be surface-modified with a polymer or other modifiers. Specific examples of the MOF include those listed in the Patent Document 1 above.

There is no restriction in the form of the porous material. As the porous material, for example, a powdery material, a pellet material, a bead material, a film material, or a block material may be used. A plurality of forms of porous materials may be used in combination.

As described above, the gas storage container 10 includes the IoT module 300. The IoT module 300 typically includes a power receiving member for a contactless power supply.

In the previous configuration disclosed in Patent Document 1, the IoT (gas remaining amount measurement) module was not equipped with the above power receiving member. However, as described above, the present inventor has newly found that the power consumption of the IoT module is relatively large and its lifespan is thereby limited. The electrical life of the IoT module is usually shorter than the physical life of the gas container and the casing. Further, the electrical life of the IoT module could be exhausted while the gas still remains in the gas container. Therefore, in the previous configuration, when the electrical life of the IoT module is exhausted, it is necessary for the administrator to retrieve the gas storage container from the user and charge or replace the IoT module, regardless of the condition of the gas container and the casing or the amount of gas still remaining.

In contrast, in the present embodiment, the IoT module 300 includes a power receiving member for contactless power supply. When such a configuration is adopted, the user can supply power to the IoT module 300 using the power supplying member corresponding to the power receiving member. That is, by employing such a configuration, even if the electrical life of the IoT module 300 has expired, the user does not need to return or replace the gas storage container 10 itself. Also, the administrator of the gas storage container 10 does not need to collect or replace the gas storage container 10 in such a case.

In the configuration shown in FIG. 10, the power receiving member of the IoT module 300 is provided near the back surface 140 of the casing 100. That is, in this configuration, the power receiving member is provided on the surface opposing the side surface of the gas container 200 where the gas outlet 202 is exposed. When such a configuration is adopted, even when a plurality of gas storage containers 10 are stacked vertically and/or arranged in parallel on the left and right, the surface on the side where the power receiving member is located remains facing outside. Therefore, when such a configuration is adopted, it becomes possible to easily supply power to any gas storage container 10 even when a plurality of gas storage containers 10 are arranged vertically and/or horizontally.

Note that in this configuration, the power receiving member of the IoT module 300 is provided inside the casing 100. That is, the power receiving member of the IoT module 300 is provided between the casing 100 and the gas container 200 and is not exposed to the outside. If such a configuration is adopted, the possibility of failure of the power receiving member can be reduced. Furthermore, by configuring the power receiving member to be invisible from the outside, the overall aesthetic appearance of the gas storage container 10 can also be improved.

The power receiving member of the IoT module 300 typically has a configuration that allows contactless power supply. In such a case, there is no need to further provide the gas storage container 10 with a cable port or the like for contact power supply. Therefore, with the above configuration, a decrease in strength of the gas storage container 10 and an increase in manufacturing cost can be suppressed compared to the case where a configuration for performing contact power supply is added thereto.

FIG. 11 is a partial exploded view of a gas storage container according to one embodiment of the present invention, showing a state where a part of the casing and the gas container are removed. FIG. 11 shows an example of a specific arrangement method of the IoT module 300 (or the IoT module P100).

In the example shown in FIG. 11, the IoT module 300 is installed near the rear surface 140 of the casing 100 . The IoT module 300 is, for example, an IoT box, and includes therein a short-range communication module P200 (not shown), a battery P140 (not shown), and a power receiving member P150 (not shown). The IoT module 300 is also connected to a sensor P110 (not shown) via a wired or wireless connection. As shown in FIG. 11, the IoT module 300 is, for example, slidably disposed in a gap between the casing 100 and the gas container 200. The components that may be included in the IoT module 300 are the same as those described above with respect to the IoT module P100.

It is preferable that the IoT module 300 does not include a long-range communication module. It is also preferable that the IoT module 300 does not include a GPS communication module. In particular, it is preferable that the IoT module 300 includes neither a long-range communication module nor a GPS communication module. By adopting such a configuration, it becomes possible to reduce the power consumption and the cost of the gas storage container P, as described above.

In the example shown in FIG. 11, the IoT module 300 is provided between the casing 100 and the gas container 200. Thus, by adopting a configuration in which at least a part of the IoT module 300 is installed between the casing 100 and the gas container 200, it is possible to reduce the likelihood of failure of the IoT module 300. Furthermore, by adopting such a configuration, it is also possible to prevent an increase in the occupied volume of the gas storage container 10 due to the addition of the IoT module 300.

In addition, when the casing 100 of the gas storage container 10 comprises a window for making the gas container 200 visible from the outside, it is preferable that at least a part of the IoT module 300 is installed between the casing 100 and the gas container 200 so that it is not visible from the window. By employing such a configuration, it is possible to reduce the possibility that the aesthetic appearance of the gas storage container 10 is impaired due to the presence of the IoT module 300. Further, by employing such a configuration, it is possible to reduce the possibility that the IoT module 300 will obstruct visual recognition of the gas container 200 from the outside.

As described above, the configuration of the IoT module 300 shown in FIG. 11 is merely an example. Each component of the IoT module 300 may be arranged at other locations in the gas storage container 10. In addition, some of the components of the IoT module 300 may be omitted as appropriate.

Gas storage container 10 is typically portable by human. The total weight of the gas storage container 10 is, for example, 30 kg or less, preferably 25 kg or less, more preferably 20 kg or less, particularly preferably 15 kg or less. Note that here, the total weight of the gas storage container 10 is the total weight of the casing 100, the gas container 200, and the IoT module 300. This total weight does not include the weight of the gas filled into the gas container 200. However, if the gas container 200 further includes a porous material, the total weight shall also include the weight of the porous material.

As described above, the gas storage container 10 may include, for example, a casing 100 having a flat top and bottom surface and being vertically stackable, a gas container 200 installed within the casing 100, and an IoT module 300. At least a part of the IoT module 300 may be installed between the casing 100 and the gas container 200. The IoT module 300 may include a power receiving member for contactless power supply. The IoT module 300 may further include a battery that can be charged by contactless power supply. The casing 100 may have a plurality of side surfaces and may further include a first gripping portion on an outer edge between the top surface and at least one of the side surfaces. The casing 100 may have a plurality of side surfaces and may further include a second gripping portion on an outer edge between the bottom surface and at least one of the side surfaces. The casing 100 may have a plurality of side surfaces, and an outlet of the gas container 200 may be exposed to the outside through a hole provided in at least one of the side surfaces. The side surface in which the hole is provided may include a depression for preventing the outlet from protruding from the outer surface of the casing 100. The power receiving member may be installed near another side surface opposite to the side surface in which the hole is provided. One of the top surface and the bottom surface may include a protrusion, and the other of the top surface and the bottom surface may include a recess corresponding to the protrusion. The casing 100 may have a plurality of side surfaces, and at least one of the side surfaces may include a protrusion, while another side surface facing the protrusion may include a recess corresponding to the protrusion. The casing 100 may include at least one window for allowing the gas container 200 to be visible from outside. In this case, at least a part of the IoT module 300 may be installed between the casing 100 and the gas container 200 so as not to be visible through the window. The window may also be provided at at least one location selected from the protrusion and the recess.

As described above, the gas storage container according to one embodiment of the present invention is typically configured to enable contactless power supply via a power receiving member of the IoT module. Hereinafter, the configuration of a pedestal for performing such contactless power supply will be described by way of example. Further, a configuration example of a gas storage system including such a gas storage container and a pedestal will also be described. The pedestal described below typically also serves as the pedestal Q1 functioning as the relay device Q.

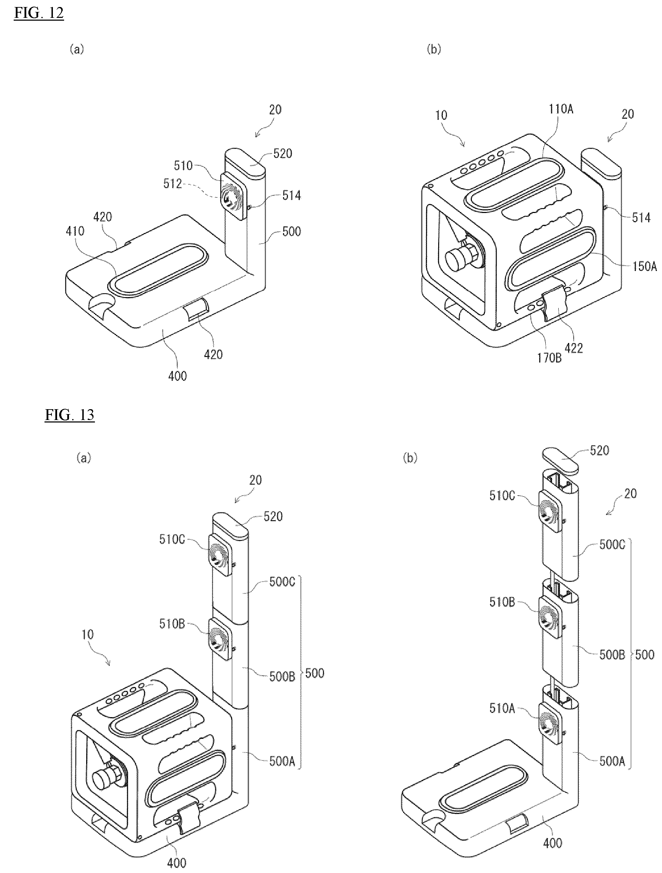

FIG. 12 is a perspective view of a pedestal and gas storage system according to one embodiment of the invention. FIG. 12(a) shows an example of the pedestal 20 without the gas storage container 10 mounted thereon. FIG. 12(b) shows an example of the pedestal 20 with the gas storage container 10 mounted thereon (i.e. gas storage system).

The pedestal 20 is for placing the gas storage container 10 and typically includes a bottom portion 400 for placing the gas storage container 10. This bottom portion 400 is configured to contact a lower surface 120 (not shown) of the casing 100 of the gas storage container 10. The bottom portion 400 is substantially flat, similar to the upper surface 110 and the lower surface 120 of the casing 100 of the gas storage container 10.

The bottom portion 400 includes a protrusion 410. This protrusion 410 has substantially the same shape as the protrusion 110A provided on the upper surface 110 of the casing 100 of the gas storage container 10. That is, the protrusion 410 has a shape corresponding to the recess 120A provided on the lower surface 120 (not shown) of the casing 100 of the gas storage container 10. By employing such a configuration, it is possible to prevent the gas storage container 10 from shifting on the pedestal 20. The protrusion 410 may be omitted.

The bottom portion 400 includes an attachment part 420 for attaching a fixing member 422. The fixing member 422 is a member for more firmly connecting the gas storage container 10 with the bottom portion 400 of the pedestal 20. In the example shown in FIG. 12, the fixing member 422 connects the second grip 170B of the gas storage container 10 and the bottom part 400 of the pedestal 20. The attachment part 420 can also be used when horizontally connecting the bottom part 400 of a pedestal 20 to the bottom part of another pedestal, as will be described later. The fixing member 422 and its attachment part 420 may be omitted.

The pedestal 20 includes a side portion 500 for supporting the gas storage container 10. In the example shown in FIG. 12, the side portion 500 supports at least one side surface of the gas storage container 10, that is, the back surface 140 of the gas storage container 10. The side portion 500 includes at least one power supplying portion 510 including a power supplying member 512 corresponding to the power receiving member of the gas storage container 10 .

The side portion 500 or the power supplying portion 510 includes an IoT module (not shown). This IoT module is, for example, configured similarly to the IoT module Q100 described above and includes at least a short-range receiving unit Q220 and a long-range transmission unit Q310. The IoT module typically includes a first communication unit for performing short-range communication with the gas storage container 10, and a second communication unit for performing long-range communication with the management device R. The first communication unit is, for example, the short-range communication module Q200 described above. The second communication unit is, for example, the long-range communication module Q300 described above. As described above, the power supplying member 512 may be used as the short-range communication module Q200 or the short-range receiving unit Q220. The IoT module may be included in another part of the pedestal 20, for example, in the bottom portion 400.

The side portion 500 extends substantially perpendicularly from one end of the bottom portion 400. The side portion 500 may be formed integrally with the bottom portion 400 or may be configured to be freely removable from the bottom portion 400.

The side portion 500 includes at least one power supplying portion 510. A power supplying member 512 is installed inside the power supplying portion 510. The power supplying portion 510 plays a role of contactlessly supplying power to the power receiving member of the gas storage container 10 through the power supplying member 512.

The power supplying member 512 is installed in a position corresponding to the power receiving member of the gas storage container 10. In the example shown in FIG. 12, the power supplying member 512 is installed in a position corresponding to the recess 142 in the back surface 140 (not shown) of the gas storage container 10. The power supplying member 512 is, for example, a power supplying coil. As described above, there are no restrictions on the method of contactless power feeding from the power supplying member to the power receiving member. The contactless power supply is preferably performed by an electromagnetic induction method or a magnetic resonance method.

The power supplying member 512 of the power supplying portion 510 is typically supplied with current from an external power source (not shown). The power source can be connected to any position on the pedestal 20. The power source may be configured to be connected to the bottom portion 400 of the pedestal 20 or may be configured to be connected to the side portion 500 of the pedestal 20. If the side portion 500 is configured to be freely removable from the bottom portion 400, the power source is more preferably configured to be connected to the bottom portion 400 of the pedestal 20.

The power supplying portion 510 further includes a lamp 514 in its vicinity. When the installed gas storage container 10 is equipped with a secondary battery, the lamp 514 plays a role in indicating whether or not charging of the secondary battery is completed. The lamp 514 is configured, for example, to emit green light when charging is complete, and to emit red light when charging is incomplete. For this purpose, the lamp 514 is installed at a position where it can be seen from the outside even when the gas storage container 10 is loaded. The lamp 514 may be omitted.

The side portion 500 includes a lid 520 at its top. The lid 520 can be removed if necessary. Removal of the lid 520 allows stacking of the side units as described below.

The pedestal 20 may be configured to be fixed to a floor or a wall. For example, the bottom portion 400 of the pedestal 20 may be configured to be fixed to a floor, and the side portion 500 of the pedestal 20 may be configured to be fixed to a wall. These fixings can be performed using, for example, bolts or the like. If such a configuration is adopted, the possibility that the pedestal 20 or the gas storage container 10 will move or fall can be reduced. Furthermore, in the gas storage system, even if the pedestal 20 is fixed, the gas storage container 10 can be freely removed and moved. Therefore, even when the pedestal 20 is fixed, the portability of the gas storage container 10 is ensured.

FIG. 13 is a perspective and exploded view of a pedestal and gas storage system according to another embodiment of the invention. FIG. 13(a) shows an example of the pedestal 20 with the gas storage container 10 mounted thereon (i.e. gas storage system). FIG. 13(b) shows an exploded view of the side portion 500 of the pedestal 20 without the gas storage container 10 mounted thereon. The pedestal 20 shown in FIG. 13 is similar to the pedestal shown in FIG. 12, except that it has three power supplying portions 510A to 510C, and it can simultaneously supply power to three gas storage containers 10 stacked one above the other. That is, the pedestal 20 shown in FIG. 13 is configured to support the gas storage containers 10 in a state where a plurality of gas storage containers 10 are stacked vertically.

In the pedestal 20 shown in FIG. 13, the side part 500 has three power supplying portions 510A to 510C. That is, the side portion 500 includes the number of power supplying portions 510 that corresponds to the number of gas storage containers 10 that can be loaded. Each of the power supplying portions 510A to 510C includes at least one power supplying member. Furthermore, at least one lamp is provided near each of the power supplying portions 510A to 510C.

In the example shown in FIG. 13, the side portion 500 comprises three side units 500A to 500C. The three side units 500A to 500C are separable from each other and each includes at least one power supplying portion 510A to 510C, respectively. These side units 500A to 500C are stacked vertically and connected to each other. A lid 520 is attached to the top of the side unit 510C. When such a configuration is adopted, the height of the pedestal 20 can be adjusted as appropriate depending on the required number of gas storage containers 10 to be loaded. There is no limit to the number of side units.

As described above, the side units 500A to 500C are stacked vertically and are at least physically connected. The side units 500 A to 500 C are typically configured to be simultaneously electrically connected by being stacked vertically. If such a configuration is adopted, there is no need to individually connect an external power source to each of the side units, and the configuration of the pedestal 20 can be simplified. Note that the electrical connection between the side units may be made separately using a cable or the like.

As described above, when the pedestal 20 is configured to support the gas storage containers 10 in a state where a plurality of gas storage containers 10 are stacked vertically, the pedestal 20 may be configured to receive information regarding the stacking position of the gas storage container 10 on the pedestal 20 via short-range communication. In such a case, the short-range communication between the gas storage container 10 and the pedestal 20 may be performed through data communication between the power receiving member and the power transmission member. The pedestal 20 may also be configured to transmit, via long-range communication, information regarding the stacking position of the gas storage container 10 on the pedestal 20 to the management device R. That is, the second signal S2 may include information regarding the stacking position of the gas storage container 10 on the pedestal 20. By adopting such a configuration, the management device R can obtain not only two-dimensional position information of the gas storage container 10 via the pedestal 20, but also three-dimensional position information including vertical position information.

When the side portion 500 may comprise a plurality of side portion units, it is preferable that components of the IoT module other than the power transmission member are included in the bottom portion 400 or in the side portion unit 500A closest to the bottom portion. By adopting such a configuration, it is not necessary to individually provide the long-range communication module Q300 or the like for each side portion unit, which is advantageous in terms of cost and simplicity.

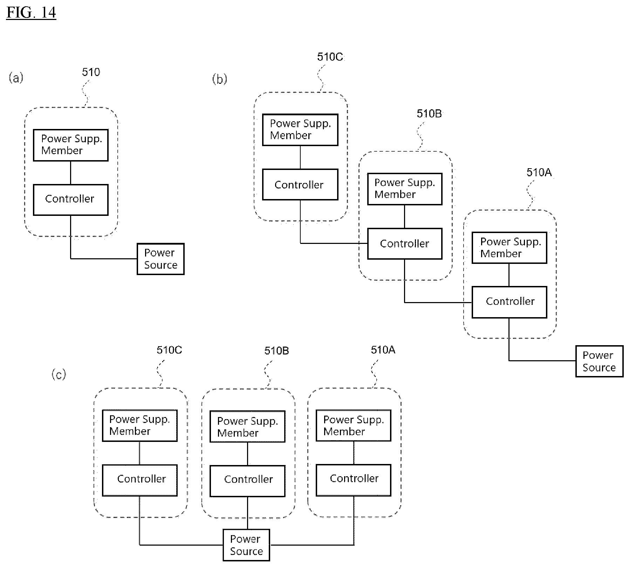

FIG. 14 is a conceptual diagram showing an example of a configuration of a power supplying (transmitting) portion of a pedestal according to an embodiment of the present invention. FIG. 14(a) shows an example in which the side portion 500 includes one power supplying portion 510. FIG. 14(b) shows an example in which the side portion 500 includes three power supplying units 510A to 510C, which are connected in series from a power source. FIG. 14(c) is an example in which the side portion 500 includes three power supplying units 510A to 510C, which are connected in parallel from a power source. In the example shown in FIG. 14, only the control unit and the power transmission member are illustrated as the configuration of the power supplying unit; however, each power supplying unit may further include any of the components described above in relation to the IoT module Q100. In the examples shown in FIGS. 14(b) and 14(c), a control unit is illustrated in each power transmission unit; however, these control units may be located outside the power transmission units. Furthermore, a single control unit may control a plurality of power transmission members.

In the example shown in FIG. 14(a), the power supplying portion 510 includes a power supplying member and a controller. The power supplying member is supplied with current from the power source via the controller.

In the example shown in FIG. 14(b), each of the power supplying members 510A to 510C includes a power supplying member and a controller. In this example, the controller of the power supply portion 510A, the controller of the power supply portion 510B, and the controller of the power supply portion 510C are connected in series from a single power source. That is, the controller of the power supplying portion 510A is connected to the power source, the controller of the power supply portion 510B is electrically connected to the controller of the power supply portion 510A, and the controller of the power supply portion 510C is electrically connected to the controller of the power supplying portion 510B. When such a configuration is adopted, it becomes possible to supply current to a plurality of power supplying portions from a single power source.

In the example shown in FIG. 14(c), each of the power supplying members 510A to 510C includes a power supplying member and a controller. In this example, the controller of the power supplying portion 510A, the controller of the power supplying portion 510B, and the controller of the power supplying portion 510C are connected in parallel to a single power source. When such a configuration is adopted, it becomes possible to supply current to a plurality of power supplying portions from a single power source. In particular, when such a parallel connection is made, it is possible to more stably supply current to the plurality of power supplying portions, compared to a case where a series connection is made.

Note that the above configuration is just an example, and electrical connections can be made in other forms. For example, a configuration may be adopted in which a plurality of power supplying portions and a plurality of power sources are individually connected to each other. The controller(s) may be omitted.

As described above, the number of power supplying portions 510 on the side portion 500 of the pedestal 20 can be adjusted according to the mode of use of the gas storage container 10.

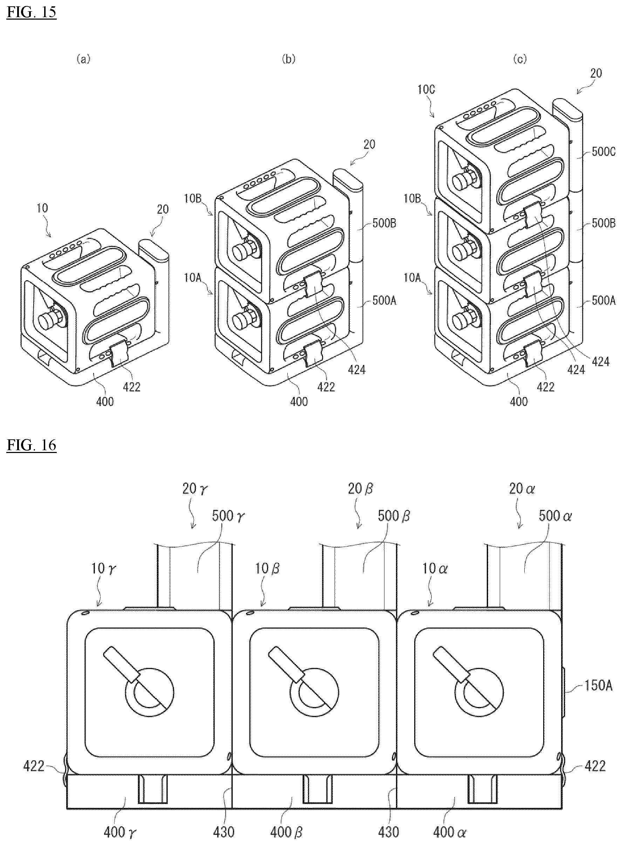

FIG. 15 is a perspective view of an example of a gas storage system according to an embodiment of the invention. FIG. 15(a) shows an example in which the side portion 500 of the pedestal 20 has one power supplying portion 510 (not shown) and one gas storage container 10 is mounted. FIG. 15(b) shows an example in which the side portion 500 of the pedestal 20 has two power supplying portions 510A and 510B (not shown) and two gas storage containers 10A and 10B are mounted. FIG. 15(c) shows an example in which the side portion 500 of the pedestal 20 has three power supplying portions 510A to 510C (not shown) and three gas storage containers 10A to 10C are mounted.

In the example shown in FIG. 15(b), two gas storage containers 10A and 10B are stacked one above the other, and correspondingly two side units 500A and 500B are stacked one above the other. In the example shown in FIG. 15(c), three gas storage containers 10A to 10C are stacked one above the other, and correspondingly, three side units 500A to 500C are stacked one above the other. Among the plurality of gas storage containers 10, those in contact with the bottom portion 400 are further fixed by a fixing member 422 by connecting the second grip 170B and the attachment part 420 (not shown). Further, the plurality of gas storage containers 10 are also connected to each other via an auxiliary fixing member 424. The connection by the auxiliary fixing member 424 is made between the first grip(s) 170A of the lower gas storage container and the second grip(s) 170B of the upper gas storage container. The auxiliary fixing member 424 may be omitted.

FIG. 16 is a front view showing an example of a gas storage system in which pedestals according to an embodiment of the present invention are arranged in a horizontal direction. The gas storage system shown in FIG. 16 includes three horizontally arranged pedestals 20α to 20γ and three gas storage containers 10α to 10γ installed on each pedestal.

In the example shown in FIG. 16, the pedestals 20α to 20γ are connected to each other in the horizontal direction at their bottom portions 400α to 400γ. This connection is typically made by a horizontal fixing member 430 via the attachment part 420 (not shown). Further, the outermost gas storage containers 10α and 10γ are fixed by fixing members 422 to the bottom portions 400α and 400γ of the pedestals 20α and 20γ, respectively. Further, the gas storage containers 10 that are adjacent to each other are further fixed by fitting the protrusion 150A provided on the right side portion 150 and the recess 160A (not shown) provided on the left side portion 160 into each other. If such a configuration is adopted, it becomes possible to further suppress horizontal displacement of the gas storage container 10 and the pedestal 20. The horizontal fixing member 430, the fixing member 422, the protrusion 150A, and the recess 160A may be omitted.

When a plurality of pedestals 20 are connected in the horizontal direction, as shown in FIG. 16, the configuration may be such that the electrical connection is made simultaneously with the physical connection between the multiple pedestals 20. In this case, if a power source is connected to at least one of the plurality of pedestals 20, power can be supplied to the gas storage container 10 even by the other pedestals 20 that are not connected to the power source. By adopting such a configuration, it becomes possible to further simplify the gas storage system.

In the examples shown in FIGS. 12 to 16, a configuration in which the bottom portion 400 is provided with a protrusion 410 has been described, but there is no particular restriction on the configuration of the protrusion. For example, when the lower surface of the gas storage container 10 is provided with a protrusion, it is preferable that the bottom portion 400 is provided with a recess corresponding to the protrusion. Further, as described above, the protrusion 410 may be omitted.

In the examples shown in FIGS. 12 to 16, the fixing member 422, the auxiliary fixing member 424, and the horizontal fixing member 430 have been described, but there are no particular limitations on their specific structures. Further, the configuration in which the fixing member 422 and the auxiliary fixing member 424 are connected through the grip(s) of the gas storage container 10 has been described, but the fixing member 422 and the auxiliary fixing member 424 may be connected through other locations. In addition, although the configuration of connecting the fixing member 422 and the horizontal fixing member 430 through the attachment part 420 of the bottom portion 400 has been described, the fixing member 422 and the horizontal fixing member 430 may be connected through other locations. Further, as described above, these fixing members may be omitted.

In the examples shown in FIGS. 13 to 15, an example has been described in which the side portion 500 comprises a plurality of mutually divisible side units; however, the side portion 500 may comprise a single unit. For example, the side portion 500 may be configured by a single unit having a plurality of power supplying portions.

The example shown in FIG. 15 describes a gas storage system in which the gas storage containers 10 are stacked only in the vertical direction, and the example shown in FIG. 10 describes a gas storage system in which the gas storage containers 10 are arranged only in the horizontal direction. However, these configurations may be combined with each other. For example, if three pedestals 20 each having three gas storage containers 10 stacked vertically are arranged horizontally, a gas storage system including 3×3=9 gas storage containers 10 can be constructed. Since the number of vertically and horizontally arranged gas storage containers is arbitrary, a gas storage system can be constructed as appropriate to meet the needs of the user. In such a case, the "information regarding the stacking position" described above may be, for example, information indicating which column and which level a specific gas storage container 10 is located at in a gas storage system including a plurality of pedestals 20.

When the gas storage system includes a plurality of gas storage containers 10, each of the gas storage containers 10 may store different types of gas. By adopting such a configuration, it is possible to construct a gas storage system that can supply multiple types of gas. Further, by installing a plurality of gas storage containers 10 containing the same type of gas, the substantial storage capacity of the gas can be increased. In this way, by allowing the configurations of the gas storage container 10 and the pedestal 20 to be customized, it is possible to provide a flexible gas storage system that meets the needs of the user.

As described above, the pedestal 20 may include a bottom portion for placing the gas storage container 10, the bottom portion being configured to contact the bottom surface of the casing 100, and a side portion for supporting the gas storage container 10. The side portion may include at least one power transmission unit including a power transmission member. The side portion may include a plurality of power transmission units corresponding in number to the gas storage containers 10 stacked. The side portion may comprise a plurality of side portion units, each including at least one power transmission unit and being connectable to each other. The gas storage container 10 may include a recess or a protrusion on its bottom surface, and the pedestal 20 may include a protrusion or a recess corresponding to the recess or the protrusion on the bottom surface of the gas storage container 10 on its bottom portion. The casing 100 of the gas storage container 10 may have a plurality of side surfaces and may further include a grip on an outer edge between the bottom surface and at least one of the side surfaces, and the pedestal 20 may further include a fixing member for physically connecting the bottom portion to the grip. The bottom portion may be further configured to be connectable in the lateral direction to the bottom portions of other pedestals. The gas storage container 10 may further include a battery that can be charged by contactless power supply, and the power transmission unit may further include a lamp for indicating the charging state of the battery.

It should be noted that in FIGS. 8 to 16, a gas storage container having a casing with a flat top and bottom surface and being vertically stackable, a gas container installed within the casing, and an IoT module has been described; however, such an IoT module can also be generally used for gas storage containers of any shape. That is, such an IoT module may also be applied to gas storage containers of any shape that is not vertically stackable.

## Claims

1. A system for managing gas storage containers, comprising:
a gas storage container equipped with a short-range transmission unit;
a relay device equipped with a short-range receiving unit and a long-range transmission unit; and
a management device equipped with a long-range receiving unit;
wherein the short-range receiving unit is configured to receive a first signal transmitted from the short-range transmission unit, and
wherein the long-range receiving unit is configured to receive a second signal transmitted from the long-range transmission unit.

2. The system according to claim 1, wherein the first signal comprises first identification information assigned to each of the gas storage containers, and the second signal comprises the first identification information and second identification information assigned to each of the relay devices.

3. The system according to claim 1 or 2, wherein the gas storage container further comprises one or more sensors used for measuring a gas remaining amount in the gas storage container, and the first signal comprises information related to the gas remaining amount.

4. The system according to claim 3, wherein at least one of the sensors is selected from the group consisting of a pressure sensor, a temperature sensor, and a liquid level sensor.

5. The system according to claim 1 or 2, wherein the gas storage container further comprises an acceleration sensor, and the first signal comprises information related to an impact applied to the gas storage container.

6. The system according to claim 1 or 2, wherein the gas storage container further comprises a battery, and the first signal comprises information related to a remaining amount of the battery.

7. The system according to claim 1 or 2, wherein the gas storage container further comprises a power receiving member, and the relay device comprises a power transmitting member corresponding to the power receiving member.

8. The system according to claim 1 or 2, wherein the relay device further comprises a memory unit in which information regarding a installation position is pre-entered or a position sensor configured for GPS communication, and the second signal comprises a position information of the relay device.

9. The system according to claim 1 or 2, wherein the gas storage container has flat upper and lower surfaces and is vertically stackable.

10. The system according to claim 9, wherein the gas storage container comprises:
a casing with a flat upper surface and a flat lower surface and is vertically stackable; and
a gas container installed in the casing.

11. The system according to claim 10, wherein the short-range transmission unit is installed between the casing and the gas container.

12. The system according to claim 1 or 2, wherein the relay device is a pedestal for placing the gas storage container.

13. The system according to claim 12, wherein the gas storage container has flat upper and lower surfaces and is vertically stackable, the pedestal is configured to support the gas storage containers in a stacked state, where a plurality of gas storage containers are stacked vertically, and the second signal comprises information related to a stacking position of the gas storage container on the pedestal.

14. A method for managing gas storage containers, comprising:
transmitting a first signal from a gas storage container to a relay device via short-range communication; and
transmitting a second signal from the relay device to a management device via long-range communication.

15. The method according to claim 14, wherein the first signal comprises first identification information assigned to each of the gas storage containers, and the second signal comprises the first identification information and second identification information assigned to each of the relay devices.

16. The method according to claim 14 or 15, wherein the first signal comprises information related to a gas remaining amount of the gas storage container.

17. The method according to claim 16, wherein the second signal comprises position information of the relay device.

18. A pedestal for placing a gas storage container, comprising:
a first communication unit for performing short-range communication with the gas storage container; and
a second communication unit for performing long-range communication with a management device.

19. The pedestal according to claim 18, further comprising a power transmitting member for supplying power to the gas storage container.

20. The pedestal according to claim 18 or 19, wherein the gas storage container has flat upper and lower surfaces and is vertically stackable, the pedestal is configured to support the gas storage containers in a stacked state, where a plurality of gas storage containers are stacked vertically, and the second communication unit is configured to transmit information related to a stacking position of the gas storage container on the pedestal to the management device.
